# EUROPÄISCHE PATENTSCHRIFT

(11) **EP 4 032 989 B1**
(45) Veröffentlichungstag und Bekanntmachung des Hinweises auf die Patenterteilung: **11.10.2023**
(21) Anmeldenummer: 21153020.9
(22) Anmeldetag: 22.01.2021
(51) Int. Cl.: C08F 251/00, C08F 289/00, C08L 51/08, C08L 89/06, C14C 1/08, C08L 51/02

(54) **ENTKÄLKUNGSZUSAMMENSETZUNG UND ENTKÄLKUNGSVERFAHREN ZUM ENTKÄLKEN VON HÄUTEN**
DELIMING COMPOSITION AND DELIMING METHOD FOR DELIMING SKINS
COMPOSITION DE DÉCHAULAGE ET PROCÉDÉ DE DÉCHAULAGE DESTINÉ AU DÉCHAULAGE DES PEAUX

(43) Veröffentlichungstag der Anmeldung: 27.07.2022
(73) Patentinhaber: TFL Ledertechnik GmbH, 79618 Rheinfelden (DE)
(72) Erfinder: RABE, Volker, 51375 Leverkusen (DE); DÖPPERT, Susanne, 51381 Leverkusen (DE)
(74) Vertreter: Maucher Jenkins Patent- und Rechtsanwälte

(56) Entgegenhaltungen:
- EP-A1- 3 425 069
- WO-A1-2013/107233
- DATABASE WPI Week 200837 Thomson Scientific, London, GB; AN 2008-F77296 XP002802938, & KR 100 788 492 B1 (DAE DUCK PROD CO LTD) 24. Dezember 2007 (2007-12-24)

## Beschreibung

Die vorliegende Erfindung betrifft eine Entkälkungszusammensetzung, ein Verfahren zum Entkälken von Häuten sowie eine Verwendung eines Pfropfpolymers als Entkälkungsmittel zum Entkälken von Häuten. Insbesondere betrifft die vorliegende Erfindung das Entkälken von Häuten mittels spezieller Pfropfpolymerisate.

Das Äschern von Häuten zum Zweck der Enthaarung und des Hautaufschlusses, etwa dem Entfernen von unerwünschten Proteinen, im Rahmen der Lederherstellung erfolgt im alkalischen Medium, meist mit Hilfe von anorganischen oder auch organischen Sulfiden bei einem pH-Wert von 12 oder höher. Als alkalisches Agens wird normalerweise Kalk, in der Regel allein, gelegentlich aber auch in Mischung mit Natronlauge oder Soda, eingesetzt. Anschließend sollte das Material zur Vorbereitung für die weitere Verarbeitung von den Äscherchemikalien, insbesondere dem Kalk, wieder befreit also "entkälkt" werden. Dieser Schritt geschieht üblicherweise durch Zugabe von Säuren oder sauren Salzen die möglichst lösliche Komplexe mit den Calcium-Ionen bilden damit diese mit dem Abwasser entfernt werden können. Desweitern soll der pH-Wert der Haut auf einen gewünschten im Wesentlichen neutralen Wert gebracht werden, da in diesem pH-Bereich das Optimum der im nachfolgenden Behandlungsschritt eingesetzten Enzymen zur Vervollständigung des Hautaufschlusses liegt. Beispiele für solche Säuren sind u.a. Phthalsäure, Sulfophthalsäure, Ameisensäure, Essigsäure, Borsäure, aliphatische Dicarbonsäure und deren Gemische, Salzsäure, Schwefelsäure und deren Ammoniumsalzen und Kohlenstoffdioxid.

Zwar sollte der pH-Wert durch ein Entkälkungsmittel auch bis in den Querschnitt der Häute reduziert werden, dabei sollte der pH-Wert aber während des Prozesses nicht bis auf oder sogar unter den isoelektrischen Punkt von Eiweiß, also etwa nicht unter den pH-Wert von ca. 5 sinken. Wenn dies passiert, werden die beim vorherigen Äschern in Lösung gegangenen Eiweißsubstanzen, gegebenenfalls zusammen mit anderen gelösten Teilchen, ausgefällt und schlagen sich auf der Oberfläche des Hautmaterials in schwer entfernbarer Form nieder. Diese Rückstände machen die Oberfläche der Haut unansehnlich und stören bei späteren Verarbeitungsgängen, insbesondere beim Färben. Auch der Griff des am Ende produzierten Endproduktes, des Leders, wird ungünstig beeinflusst.

Aus diesem Grund können die meisten Säuren nur in sehr kleinen Dosen nach und nach zugegeben werden damit auch kurzfristig und lokal der pH-Wert von ca. 5 nicht unterschritten wird, was aufgrund der schwankenden Menge an im System vorhanden Kalk während des Lederherstellungsprozesses nicht oder nur bedingt praktikabel ist.

Bis heute am häufigsten genutzt werden aus diesem Grund für die Entkälkung Ammoniumsalze welche einen Pufferberreich um ca. pH 9 haben und somit ein Absinken des pH-Wertes auf ein kritisches Niveau unwahrscheinlich machen. Daneben sind Ammoniumsalze aufgrund der Verwendung als Düngemittel global leicht verfügbar und wirtschaftlich interessant. Die Verwendung hat aber Nachteile. Zum einen wird während des Entkälkungsvorgangs Ammoniakgas freigesetzt, welches neben der Geruchsbelästigung auch zur Reizung der Atemwege der Bediener entsprechender Anlagen führen kann. Zum anderen enthält das Abwasser eine große Menge Ammoniakstickstoff welches aus ökologischer Sicht problematisch ist. Aus diesem Grund ist oft die Menge im abzugebenden Ablaufwasser der Gerbereien durch gesetzliche Reglementierungen begrenzt.

Um die oben beschriebenen Probleme zu vermeiden wurden deshalb eine Vielzahl an alternativen Entkälkungsmitteln entwickelt.

Die Verwendung von Butyrolacton als Entkälkungsmittel ist aus der DE 804 827 bekannt. Dieses Lacton hydrolysiert unter den üblichen Entkälkungsbedingungen und sorgt dadurch für einen milden pH-Verlauf während des Prozesses. Jedoch erfolgt die Hydrolyse sehr langsam und dadurch sind die Prozesszeiten nur bedingt praktikabel.

In EP 0 059 909 A1 werden fünf- oder sechsringgliedrige cyclische Carbonate eines mehrwertigen aliphatischen Alkohols, z. B. Ethylencarbonat oder 1,2-Propylencarbonat, als Entkälkungsmittel verwendet, bei deren Anwendung pH-Werte von 7,5 nicht unterschritten werden. Die Wirkung beruht hier ebenfalls auf einer basischen Hydrolyse des Esters. Nachteil dieser Verbindungen sind wie im Falle des Butyrolacton ebenfalls ein langsames Hydrolysieren, so dass die benötigten Zeiten für die Praxis teilweise zu lang sind.

Ein weiteres Entkälkungsmittel wird in WO 2013/107233 A1 offenbart. Dieses Mittel besteht aus Polysuccinimid oder Hydroxypolysuccinimid. Die Pufferwirkung beruht auf der Ringöffnung des Polysuccinimid im basischen und sorgt für eine stabile pH-Führung während der Entkälkung. Aufgrund des polymeren Charakters der Verbindungen dringen diese aber nur relativ langsam in die Haut ein und haben sich aus diesem Grunde nicht durchgesetzt.

In EP 3 425 068 A1 wird als Entkälkungsmittel Aminosäure und/oder Proteinhydrolysat, welches Aminosäure enthält, vorgeschlagen. Der Vorteil hierbei ist, dass durch den ampholitischen Charakter der Aminosäuren eine pH-Pufferung während des Prozesses stattfindet. Des Weiteren bilden die Aminosäuren lösliche Calciumsalze. Dies gilt aber nur im begrenzten Umfang auch für das Proteinhydrolysat, bei welchen die meisten aktiven Stickstoff-und Carboxylgruppen durch Peptidbindungen untereinander blockiert sind. Zwar wird der Hydrolysierungsgrad nicht näher spezifiziert, aber konsequenterweise wird im Patent erwähnt, dass ein hoher Hydrolysierungsgrad verbunden mit einem hohen Gehalt an Aminosäuren präferiert wird, da die Aminosäure als eigentliches Entkälkungsmittel beschrieben wird. Durch den hohen Hydrolysierungsgrad wird die Hydrolyse von möglichen Proteinquellen aber relativ aufwendig.

In EP 3 425 069 A1 wird als Entkälkungsmittel ein Proteinhydrolysat vorgeschlagen, welches durch saure Hydrolyse von Haaren, Falzspänen oder anderen während der Lederherstellung anfallenden Reststoffen gewonnen werden kann. Auch hier werden als aktives Entkälkungsmittel die Aminosäuren beschrieben. Die Notwendigkeit einer relativ aufwendigen Hydrolyse mit hohem Hydrolysierungsgrad wird durch die in den Beispielen gezeigte Hydrolyse bei erhöhtem Druck ersichtlich, welche die Verwendung eines Autoklaven für die Hydrolyse notwendig macht.

Es ist somit die Aufgabe der vorliegenden Erfindung, ein Verfahren zum Entkälken von Häuten bereitzustellen, das wenigstens einen Nachteil des Stands der Technik zumindest teilweise zu überwinden vermag. Es ist insbesondere die Aufgabe der vorliegenden Erfindung, ein einfaches Verfahren zum Entkälken von Häuten bereitzustellen, welches den Einsatz von Ammoniumsalzen reduziert oder vermeidet und wobei das verwendete Entkälkungsmittel ganz oder teilweise auf der Verwendung von nachwachsenden, natürlichen Polymeren beruht.

Die Lösung der Aufgabe erfolgt erfindungsgemäß durch eine Entkälkungszusammensetzung mit den Merkmalen des Anspruchs 1. Die Lösung der Aufgabe erfolgt erfindungsgemäß ferner durch ein Verfahren zum Entkälken von Rohhaut mit den Merkmalen des Anspruchs 10, ein Verfahren zum Herstellen von Leder mit den Merkmalen des Anspruchs 12 sowie eine Verwendung mit den Merkmalen des Anspruchs 13. Bevorzugte Ausgestaltungen der Erfindung sind in den Unteransprüchen, in der Beschreibung und in den Beispielen offenbart, wobei weitere in den Unteransprüchen oder in der Beschreibung oder den Beispielen beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die vorliegende Erfindung betrifft eine Entkälkungszusammensetzung zum Entkälken von Häuten, wobei, die Entkälkungszusammensetzung wenigstens aufweist:
- Eine zu entkälkende Haut; und
- ein Entkälkungsmittel, wobei das Entkälkungsmittel ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
   (a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
   (b) andere monoethylenisch ungesättigter Monomere, die mit dem. Monomer (a) copolymerisierbar sind als die Monomere (a), umfassen, und wobei
   (c) Monomere mit mindestens zwei ethylenisch ungesättigten, nichtkonjugierten Doppelbindungen im Molekül sind,
   in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

Überraschend wurde gefunden, dass die hier beschriebene Entkälkungszusammensetzung insbesondere durch das Vorhandensein des spezifischen Pfropfpolymerisats als Entkälkungsmittel die vorbeschriebene Aufgabe hinsichtlich einer Entkälkung der zu entkälkenden Haut lösen kann.

Die Entkälkungszusammensetzung enthält zunächst die zu entkälkende Haut. Diesbezüglich sei erläutert, dass in an sich bekannter Weise das Entkälken ein Arbeitsschritt ist, der im Rahmen der Lederherstellung im Anschluss an ein Äschern oder Schwöden, beispielsweise, sich anschließt. Derartige zu entkälkende Haut wird auch als Blöße bezeichnet. Blöße zeichnet sich dadurch aus, dass bei dieser die Haare und/oder der Fettanteil reduziert wurde beziehungsweise im spezifischen Anschluss an ein Äschern, dass die Haare und/oder dass der Haut anhaftende Fett entfernt wurde. Somit umfasst die geäscherte Haut beispielsweise nur die reine Rohhaut, insbesondere ohne Haare und insbesondere ohne Fettreste.

Die geäscherte Haut, beispielsweise, weist dabei noch Substanzen auf, die zum Äschern verwendet wurden. Beispielhaft genannt sind hier Calciumhydroxid und Natriumsulfid, Kalkhydrat, Schwefelnatrium sowie verschiedene Enzyme. Darüber hinaus weist die zu entkälkende Haut durch die vorgelagerten Prozesse einen pH-Wert im basischen Bereich auf, insbesondere in einem pH-Bereich von größer 9, etwa von größer oder gleich 10, meist von größer oder gleich 11.

Diese Substanzen sollten jedoch aus der Haut beziehungsweise Blöße entfernt werden, um die Haut für das Gerben, einem weiteren an sich bekannten Prozessschritt in der Lederherstellung, vorzubereiten. Dieser Schritt ist insbesondere das Entkälken, welches ebenfalls zur Vorbereitung der Haut für das Gerben dient. Beim Entkälken werden die für das Äschern, beispielsweise, verwendete Substanzen aus der Haut entfernt und ferner soll der pH-Wert gesenkt werden, bestenfalls auf einen im Wesentlichen neutralen Bereich. Dies kann durch ein Entkälkungsmittel realisiert werden. Somit weist die Haut nach dem Entkälken einen pH-Wert auf, der etwa in einem Bereich liegt von größer oder gleich 7 bis kleiner oder gleich 9.

Das Entkälkungsmittel dient somit insbesondere dazu, den pH-Wert aus dem basischen Bereich auf einen im Wesentlichen neutralen Bereich zu senken und durch das Entkälken können die Äschersubstanzen, beispielsweise, entfernt werden.

Erfindungsgemäß ist es vorgesehen, dass das Entkälkungsmittel im Wesentlichen ein Pfropfpolymerisat von Polysacchariden, Polypeptiden und/oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
   (a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
   (b) andere monoethylenisch ungesättigter Monomere, die mit dem Monomer (a) copolymerisierbar sind, als die Monomere (a), umfassen, und wobei
   (c) Monomere mit mindestens zwei ethylenisch ungesättigten, nichtkonjugierten Doppelbindungen im Molekül umfassen,
   in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

Überraschend wurde somit gefunden, dass die Aufgabe gelöst werden kann unter Verwendung von Pfropfpolymerisaten aus Polysacchariden und/oder Polypeptiden oder deren jeweiligen Derivaten, erhältlich durch radikalische Polymerisation von einem Monomeren, ausgewählt wenigstens aus oder einer Monomerenmischung von Acrylsäure oder Methacrylsäure oder deren Mischungen. Solche Pfropfpolymere auf Basis natürlicher Polymere sind bekannt und deren Herstellung wird unter anderem beschrieben in WO2012/163823 oder DE4416877. Anders als in diesen Dokumenten, wo die entsprechenden Polymere zur Gerbung, also einem der Entkälkung nachfolgendem Prozessschritt verwendet werden, wurden in überraschender Weise die Vorteile der vorbeschriebenen Polymere als Entkälkungsmittel gefunden.

Diese Verbindungen können die gestellte Aufgabe erfüllen ohne die Notwendigkeit einer aufwendigen Hydrolyse bis zu einem hohen Hydrolysierungsgrad der natürlichen Polymerkomponente, wie beispielsweise den Lederfalzspänen, und trotz Ihres polymeren Charakters.

Vorteilhaft ist dabei, dass die Polymerkomponenten natürliche Polymerkomponenten aufweisen können. Unter natürlichen Polymerkomponenten werden hierbei alle Arten von polysaccharidischen und polypeptidischen Quellen verstanden. Beispiele hierfür sind unter anderem Stärke, Falzspäne, Lederstücke, Knochenleim, Haare und Federn, welche als Polysaccharide oder Polypeptide dienen können.

Den zum Entkälken benutzten Pfropfpolymerisaten können zur Ausbildung der Entkälkungszusammensetzung auch Entkälkungshilfsmittel, Puffersalze, organische Säure oder proteolytisches Enzyme zugesetzt werden.

Entkälkungshilfsmittel können Magnesiumsalze, Zucker und/oder Melasse sein. Das beschriebene Puffersalz kann ausgewählt sein aus Natriumpyrosulfat, Natriumbisulfit, Natriumformiat, Natriumacetat, und die beschriebene Säure kann ausgewählt sein aus Phthalsäure, Sulfophthalsäure, Ameisensäure, Essigsäure, Milchsäure, Zitronensäure, Bernsteinsäure, Hexandisäure, Borsäure, aliphatischer Dicarbonsäure und deren Gemische, Salzsäure, Schwefelsäure und deren Ammoniumsalzen und Kohlenstoffdioxid. Das beschriebene proteolytische Enzym kann ausgewählt werden aus weichmachenden proteolytischen Enzymen.

Die beschriebene Entkälkungszusammensetzung ermöglicht insbesondere durch die Verwendung des Entkälkungsmittels, dass hierdurch ein dem Fachmann an sich bekanntes Verfahren zum Entkälken von Häuten durchgeführt werden kann, wobei lediglich das Entkälkungsmittel verändert werden braucht. In anderen Worten können an sich bekannte Prozesse verwendet werden, wobei als Entkälkungsmittel das beschriebene Pfropfpolymerisat verwendet wird beziehungsweise wobei das Entkälkungsmittel das beschriebene Pfropfpolymerisat aufweist.

Somit besteht der Vorteil der beschriebenen Entkälkungszusammensetzung insbesondere darin, dass die Verwendung von Ammoniumsalzen in einem Entkälkungsprozess vermieden bzw. reduziert werden kann durch Verwendung von Pfropfpolymerisaten basierend auf natürlichen Polymeren. Der Einsatz von nachwachsenden Rohstoffen und die Reduzierung der Ammoniumsalze im Abwasser führt zu erheblichen ökologischen und ökonomischen Vorteilen. Bei Verwendung von während der Lederherstellung anfallenden Reststoffen wie z.B. Haaren und Falzspänen als Ausgangsstoff für die Pfropfpolymerisate ergebenen sich zusätzlich zur Reduktion der Abfallmenge auch logistischen Vorteilen für die Gerbereien.

Darüber hinaus kann erfindungsgemäß es erreicht werden, dass der pH-Wert auch bis in den Querschnitt der Häute reduziert wird, wobei der pH-Wert aber nicht bis auf oder sogar unter den isoelektrischen Punkt von Eiweiß sinkt. Dadurch wird verhindert, dass die beim vorherigen Äschern in Lösung gegangene Eiweißsubstanzen, gegebenenfalls zusammen mit anderen gelösten Teilchen, ausgefällt werden und sich auf der Oberfläche des Hautmaterials in schwer entfernbarer Form niederschlagen. Rückstände, die die Oberfläche der Haut unansehnlich machen und bei späteren Verarbeitungsgängen stören, insbesondere beim Färben, können so deutlich reduziert oder sogar vollständig verhindert werden. Auch der Griff des am Ende produzierten Endproduktes, des Leders, wird nicht ungünstig beeinflusst.

Durch den erfindungsgemäß möglichen Verzicht auf Ammoniumsalze, so dass die Entkälkungszusammensetzung frei ist von derartigen Salzen, kann weiterhin verhindert werden, dass Ammoniakgas freigesetzt wird, welches neben der Geruchsbelästigung auch zur Reizung der Atemwege der Bediener entsprechender Anlagen führen kann. Zum anderen enthält das Abwasser bevorzugt keinen oder nur eine äußerst geringe Menge zusätzlich zu dem von der Haut abstammenden Ammoniakstickstoff, was ökologische Aspekte weiter verbessern kann. In anderen Worten kann gegebenenfalls entsprechender Ammoniakstickstoff vorkommen, dies aber nur in sehr geringen Mengen insbesondere verglichen zu Entkälkungsverfahren aus dem Stand der Technik.

Darüber hinaus können die Pfropfpolymere bevorzugt in Wasser dispergierbar oder wasserlöslich sein, was die Prozessführung bei einer Entkälkung besonders positiv gestalten kann.

Zusammenfassend ergeben sich somit besondere Vorteile hinsichtlich ökologischer und ökonomischer Gesichtspunkte, die so im Stand der Technik nicht möglich waren.

Die bevorzugt wasserlöslichen Pfropfpolymerisate sind erhältlich durch Homo- oder Copolymerisation der Monomere A in Gegenwart der Naturstoffe B1) und/oder B2). Geeignete Monomere A umfassen die Gruppe (a) (Meth)acrylsäure und deren Alkali-, Erdalkali- oder Ammoniumsalze. Es können auch Mischungen hiervon verwendet werden. Diese Salze sind z.B. als (Meth)acrylsäure erhältlich, wenn die Säure in wässriger Lösung mit Natronlauge, Magnesiumhydroxidlösung, Ammoniak, Aminen oder Alkaloaminen neutralisiert wird. Die Monomere A der Gruppe (a) können zusammen mit anderen monoethylenisch ungesättigten Monomeren (b), die mit den Monomeren (a) co-polymerisierbar sind, der Pfropfcopolymerisation unterworfen werden. Die Menge der Monomere (a) in der Monomermischung beträgt dann 20 bis 100, vorzugsweise 40 bis 100, insbesondere 98 bis 100, Gew.-%, bezogen auf alle Monomere A während die Monomere (b) in einer Menge von bis zu 80, vorzugsweise bis zu 60, insbesondere bis zu 2, Gew.-% darin enthalten sein können.

Beispiele für die Monomere A der Gruppe (b), die bei der Pfropfpolymerisation verwendet werden, sind Crotonsäure, Maleinsäure, Maleinsäureanhydrid, Fumarsäure, Citraconsäure, Citraconsäureanhydrid, C₁-C₈-Alkyl- und Hydroxyalkylester der Acrylsäure, Methacrylsäure oder Crotonsäure und Mono- oder Di-C₁-C₈-Alkyl- oder -Hydroxyalkylester der Maleinsäure, Fumarsäure oder Citraconsäure, z.B. Methylacrylat, Ethylacrylat, n-Butylacrylat, Methylmethacrylat, Monomethylmaleat, Dimethylmaleat, Monoethylmaleat, Diethylmaleat, β-Hydroxyethylacrylat, β- und γ-Hydroxypropylacrylat, ö-Hydroxybutylacrylat, β-Hydroxyethylmethacrylat und β- und γ-Hydroxypropylmethacrylat. Als Monomere A der Gruppe (b) eignen sich auch Amide und N-substituierte Alkylamide der unter (a) genannten Verbindungen, z.B. Acrylamid, Methacrylamid, N-Alkyl(meth)acrylamide, bei denen die Alkylgruppe 1 bis 18 C-Atome aufweist, wie N-Methylacrylamid, N,N-Dimethylacrylamid, N-tert-Butylacrylamid, N-Octadecylacrylamid, Dimethylaminopropylmethacrylamid und Acrylamidoglykolsäure. Andere geeignete Monomere (b) sind Alkylaminoalkyl(meth)acrylate, z.B. β-(Dimethylamino)ethylmethacrylat, β-(Dimethylamino)ethylacrylat, β-(Diethylamino)ethylacrylat, δ-(Diethylamino)-propyl acrylat und ö-(Diethylamino)propyl-Methacrylat.

Weitere geeignete Monomere der Gruppe (b) sind sulfogruppenhaltige Monomere, z.B. Vinylsulfonsäure, Allylsulfonsäure, Methallylsulfonsäure, Styrolsulfonsäuren, 3-Sulfopropylacrylat, 3-Sulfopropylmethacrylat und Aciylamidopropansulfonsäure, sowie Monomere mit Phosphonsäuregruppen, z.B. Vinylphosphonsäure, Allylphosphonsäure und Aciylamidomethylpropansulfonsäure.

Zu dieser Gruppe (b) der Monomeren A gehören auch N-Vinylpyrrolidon, N-Vinylcaprolactam, N-Vinyliformamid, N-Vinyl-N-methylformamid, 1 -Vinylimidazol, 1 -Vinyl-2- methylimidazol, Vinylacetat und Vinylpropionat, Acryionitril und Methacrylnitril, Acrolein und Methacrolein, Crotonaldehyd und deren Acetale.

Weitere geeignete Monomere A der Gruppe (b) sind Ester von alkoxylierten C₁-C₈-Alkoholen, die mit 2 bis 50 Mol Ethylenoxid, Propylenoxid, Butylenoxid oder einem Gemisch davon mit den monoethylenisch ungesättigten Carbonsäuren der Gruppe (a) umgesetzt wurden, z.B. die Ester der Acrylsäure oder Methacrylsäure mit einem C_{13/15}-Alkohol, der mit unterschiedlichen Mengen Ethylenoxid umgesetzt wurden, z.B. 3, 5, 7, 10 oder 30 Mol Ethylenoxid.

Als Monomere A der Gruppe (b) eignen sich auch Vinylaromaten, wie Styrol und α-MethylStyrol, sowie C₁-C₁₂-Olefine, z. B. Ethylen, Propylen, 1-Buten, 2-Buten oder Butadien.

Weitere geeignete Monomere A der Gruppe (b) sind N-mono- und N,N-disubstituierte Amide monoethylenisch ungesättigter C₃-C₈-Carbonsäuren, wobei der Amidstickstoff als Substituenten polyoxyalkylierte C₂-C₂₈-Alkanole, insbesondere C₂-C₁₈-Alkanole, trägt, die mit 2 bis 100, insbesondere 3 bis 20, Mol Ethylenoxid, Propylenoxid und/oder Butylenoxid umgesetzt worden sind. Beispiele für solche Verbindungen sind H₂C=CH-CO-NH-CH₂CH₂-O(C₂H₄O)ₙ-H, H₂C=CH-CO-N[CH₂CH₂O-(C₂H₄O)ₙ-H]₂, H₂C=C(CH₃)-CO-NH-(CH₂)₄-O-(C₂H₄O)ₙ-H, H₂C=C(CH₃)-CO-NH-C₂H₄O-(C₃H₆)ₙ-H und H₂C=CH-CO-NH-(CH₂)₁₈-O-(C₂H₄O)ₙ-H, wobei bei den vorgenannten Verbindungen gilt n= 3 bis 20.

Die basischen Monomere werden vorzugsweise in Form der Salze mit Mineralsäuren, z. B. Salzsäure, Schwefelsäure oder Salpetersäure, oder in quaternisierter Form eingesetzt. Geeignete Quaternierungsmittel sind z.B. Dimethylsulfat, Diethylsulfat, Methylchlorid, Ethylchlorid und Benzylchlorid. Die Carbonsäuren werden vorzugsweise in Form der freien Säuren und als Alkali-, Erdalkali- oder Ammoniumsalze oder als Mischungen davon eingesetzt.

Komponenten (b) der Monomermischung A, die bevorzugt zur Herstellung der Pfropfpolymerisate eingesetzt werden, sind Crotonsäure, Maleinsäure, Maleinsäureanhydrid, Fumarsäure, Citraconsäure, Citraconsäureanhydrid, C₁-C₈-Alkyl-, insbesondere C₁-C₄-Alkyl, oder Hydroxyalkylester der Acrylsäure oder Methacrylsäure oder Crotonsäure, Mono- oder Di-C₁-C₈-Alkyl, insbesondere C₁-C₄-Alkyl oder-Hydroxyalkylester der Maleinsäure, Fumarsäure oder Citraconsäure, Acrylamid, Methaciylamid, Methacrolein, Acrylamidomethylpropansulfonsäure, N-Vinylimidazol oder ein Gemisch davon.

Die Pfropfpolymerisate können weiter modifiziert werden, indem die Pfropfpolymerisation in Gegenwart von Monomeren A der Gruppe (c) durchgeführt wird. In diesem Fall enthalten die Monomermischungen insbesondere bis zu 5 Gew.-% eines Monomers mit mindestens zwei ethylenisch ungesättigten, nicht konjugierten Doppelbindungen im Molekül. Diese Verbindungen werden üblicherweise als Vernetzer in Co-Polymerisationen eingesetzt. Sie können den Monomeren der Gruppe (a), die für die Copolymerisation verwendet werden, oder den Monomermischungen aus (a) und (b) zugesetzt werden. Werden sie eingesetzt, so beträgt die bevorzugte Einsatzmenge der Monomere (c) 0,05 bis 2 Gew.-% bezogen auf die Gesmatmonomermenge. Die gleichzeitige Verwendung der Monomere A der Gruppe (c) bei der Copolymerisation führt zu einer Erhöhung der K-Werte der Copolymere.

Entsprechend kann es vorteilhaft sein, dass die Monomerenmischung des Monomers (A) umfasst:
(a) Acrylsäure oder Methacrylsäure oder ein Gemisch davon oder der Alkalimetall-, Erdalkalimetall- oder Ammoniumsalze davon, und wenigstens eines von (b) und (c), wobei
(b) andere monoethylenisch ungesättigter Monomere, die mit dem. Monomer (a) copolymerisierbar sind, als die Monomere (a), umfassen, und wobei
(c) Monomere mit mindestens zwei ethylenisch ungesättigten, nichtkonjugierten Doppelbindungen im Molekül sind.

Geeignete Verbindungen (c) sind z. B. Methylenbisacrylamid, Ester der Acrylsäure und Methacrylsäure mit polyhydrischen Alkoholen, z.B. Glykoldiacrylat, Glyceryltriacrylat, Ethylenglykoldimethacrylat, Glyceryltrimethacrylat und Polyole, wie Pentaerythrit und Glucose, die mit Acrylsäure oder Methacrylsäure mindestens diesterifiziert sind. Weitere geeignete Vernetzer sind Divinylbenzol, Divinyldioxan, Pentaerythritoltriallylether und Pentaallylsucrose. Aus dieser Gruppe werden bevorzugt wasserlösliche Monomere, insbesondere Ethylenglykoldiacrylat oder Glykoldiacrylate von Polyethylenglykolen mit einem Molekulargewicht von bis zu 3.000 Dalton oder ein Gemisch davon, eingesetzt. In einer bevorzugten Ausführungsform werden zur Herstellung der Pfropfpolymerisate Acrylsäure oder deren Alkali-, Erdalkali-oder Ammoniumsalze allein als Monomer A oder ein Gemisch aus mindestens 80, insbesondere mindestens 98 Gew.-% Acrylsäure oder deren Alkali-, Erdalkali- oder Ammoniumsalze und den Monomeren (b) als Monomerengemisch A eingesetzt. Die Polymerisation der Monomeren A erfolgt vorzugsweise in Gegenwart von Naturstoffen auf Basis der Verbindungen B1) oder B2).

Es kann jedoch auch vorteilhaft sein, wenn das Monomer A frei ist von den Monomeren (b) und (c) beziehungsweise dass das Monomer A nur aus den Monomeren (a) besteht.

### B1

Als Derivate der Polysaccharide gelten oxidativ, hydrolytisch oder enzymatisch abgebaute Polysaccharide, oxidierte hydrolytisch abgebaute oder oxidierte enzymatisch abgebaute Polysaccharide oder solche chemisch modifizierten Abbauprodukte oder chemisch modifizierte Mono-, Oligo- oder Polysaccharide.

Aus wirtschaftlicher Sicht werden als Polysaccharide der Komponente B1) bei der Pfropfpolymerisation bevorzugt Stärke, thermisch und/oder mechanisch behandelte Stärke, oxidativ, hydrolytisch oder enzymatisch abgebaute Stärken und chemisch modifizierte Stärken eingesetzt, insbesondere ist jede Stärke geeignet. Bevorzugt werden jedoch Stärken, die aus Mais, Weizen, Reis und Tapioka gewonnen werden, insbesondere auch Kartoffelstärken, verwendet. Die Stärken sind praktisch wasserunlöslich und können in bekannter Weise durch thermische und/oder mechanische Behandlung oder durch enzymatischen oder säurekatalysierten Abbau in eine wasserlösliche Form überführt werden. Weitere geeignete Komponenten B1) sind oxidativ abgebaute Stärken. Beispiele für Stärkeabbauprodukte, die durch oxidativen, hydrolytischen oder enzymatischen Abbau von Stärke erhältlich sind, sind folgende Verbindungen: Dextrine, wie Weiß- und Gelbdextrine, Maltodextrine, Glucosesirupe, Maltosesirupe, Hydrolyseprodukte mit einem hohen Gehalt an D-Glucose, Stärkeverzuckerungsprodukte sowie Maltose und D-Glucose und deren Isomerisierungsprodukt Fructose.

Weitere geeignete Komponenten B1) sind oxidierte Stärken, z. B. Dialdehydstärke, und oxidierte Stärkeabbauprodukte, wie Gluconsäure, Glucarsäure und Glucuronsäure. Solche Verbindungen erhält man z. B. durch Oxidation von Stärke mit Periodat, Chromsäure, Wasserstoffperoxid, Stickstoffdioxid, Stickstofftetroxid, Salpetersäure oder Hypochlorit.

Weitere geeignete Komponenten B1) sind chemisch modifizierte Polysaccharide, insbesondere chemisch modifizierte Stärken, z. B. Stärken und Stärkeabbauprodukte, die mit Säuren zu Estern und mit Alkoholen zu Ethern umgesetzt wurden. Die Veresterung dieser Stoffe ist sowohl mit anorganischen als auch mit organischen Säuren bzw. deren Anhydriden oder Chloriden möglich, bei der direkten Veresterung führt das freigesetzte Wasser zur säurekatalysierten Spaltung der glykosidischen Bindungen. Von besonderem industriellem Interesse sind phosphatierte und acetylierte Stärken und Stärkeabbauprodukte. Die gängigste Methode zur Veretherung von Stärke ist die Behandlung der Stärke oder der Stärkeabbauprodukte mit organischen Halogenverbindungen, Epoxiden oder Sulfaten in wässrigalkalischer Lösung. Stärkeether sind z. B. die Alkylether, Hydroxyalkylether, Carboxyalkylether und Allylether der Stärke. Unter chemisch modifizierten Stärken der Komponente B1) versteht man insbesondere kationisch modifizierte Stärken, z. B. mit 2,3-Epoxypropyltrimethylammoniumchlorid umgesetzte Stärken, wie sie in US 3,649,616 beschrieben sind.

Zu den chemisch modifizierten Polysacchariden gehören z. B. Carboxymethylcellulose, Hydroxyethylcellulose, Hydroxypropylcellulose, Carboxymethylhydroxyethylcellulose, Sulfoethyl- cellulose, Carboxymethylsulfoethylcellulose, Hydroxypropylsulfoethylcellulose, Hydroxyethyl- sulfoethylcellulose, Methylsulfoethylcellulose und Ethylsulfoethylcellulose.

Weitere geeignete Komponenten B1) sind chemisch modifizierte Stärkeabbauprodukte, z. B. hydrierte Produkte der Stärkehydrolyse, wie Sorbit und Mannit, Maitit und hydrierte Glucosesirupe oder oxidierte hydrolytisch oder enzymatisch abgebaute Stärken.

Auch die Produkte der säurekatalysierten oder enzymatischen Transglukosidierung oder Glykosidierung, z. B. Methylglukosid, sind geeignet.

Besonders bevorzugte Komponenten B1) sind hydrolytisch abgebaute Stärken, insbesondere von Weizen, etwa mit einem hohen Gehalt an Monosacchariden und reine Monosaccharide.

In einer bevorzugten Ausführungsform hat das Polysaccharid B1) ein mittleres Molekulargewicht von 500 bis 10.000 Dalton, insbesondere von 3000 bis 10000 Dalton, vorzugsweise 3000 bis 8000 Dalton. Besonders bevorzugt ist das Polysaccharid B1) ein oxidativ, hydrolytisch oder enzymatisch abgebautes Polysaccharid mit einem mittleren Molekulargewicht von 500 bis 10.000 Dalton, insbesondere von 3000 bis 10000 Dalton, vorzugsweise 3000 bis 8000 Dalton, insbesondere hydrolytisch abgebaute Stärke.

Das besonders bevorzugte Polysaccharid B1) ist die hydrolytisch abgebaute Stärke aus Nahrungspflanzen wie Kartoffel oder Mais, insbesondere mit einer breiten Molekulargewichtsverteilung. Dies kann durch Mischen verschiedener hydrolytisch abgebauter Stärken erreicht werden.

### B2

Als Derivate der Polypeptide gelten hydrolytisch abgebaute oder enzymatisch abgebaute und gegebenenfalls chemisch modifizierte Polypeptide.

Bevorzugt sind hinsichtlich der Polypeptide B2) alle Proteine, von denen sich unter den Polymerisationsbedingungen ein Anteil von mindestens 20 Gew.-% im Polymerisationsmedium löst. Beispiele für geeignete Proteine sind in Ullmanns Enzyklopädie der technischen Chemie, 4. Auflage, Weinheim, 1980, Band 19, S. 491 bis 557 angegeben. Die Polypeptide sind nachwachsende Rohstoffe. Sie stammen z. B. aus Häuten, Stütz- und Bindegewebe, Knochen und Knorpel, z. B. Kollagen, Elastin, Gelatine, Ossein und Hautkleber. Polypeptide aus Milch sind Milchpolypeptide, Kasein und Laktalbumin. Wolle, Borsten, Federn und Haare liefern Keratin. Ebenfalls geeignet sind Polypeptide aus Fischen und Eiern und aus Blut als Abattoirabfall, zum Beispiel Blutpolypeptide, Albumin, Globulin, Globin, Fibrinogen und Hämoglobin. Weitere geeignete Polypeptide stammen aus Pflanzen, wie z.B. Com, Weizen, Gerste und Hafer, z.B. Glutelin, Proiamin, Zein und Bluten. Darüber hinaus können Polypeptide aus Saatgut gewonnen werden, z.B. aus Sojabohnen, Baumwollsamen, Erdnüssen, Sonnenblumen, Raps, Kokosnüssen, Leinsamen, Sesam, Saflour, Erbsen, Bohnen und Linsen. Darüber hinaus können die Polypeptidbestandteile von Klee, Luzerne, Gras, Kartoffeln, Cassava und Yamswurzel verwendet werden. Weitere Polypeptidquellen sind Bakterien, Pilze, Algen und Hefen, zum Beispiel Pseudomonas, Lactobacillus, Penicillium, Blaualgen, Grünalgen, Chlorella, Spirulina und Überschusshefe.

Bevorzugte Polypeptide als Komponente B2) zur Herstellung der Pfropfcopolymere sind Kollagen aus Haut und Fell (natürlich oder durch Gerbung modifiziert), Kasein, Gelatine, Knochenleim, Polypeptide aus Soja, Getreide, insbesondere Weizen und Mais, und Erbsen. Die Polypeptide können aus den natürlichen Rohstoffen z. B. durch Auflösen, Mahlen, Sieben und Klassieren gewonnen werden. Um sie in eine bevorzugte lösliche Form zu bringen, ist es in vielen Fällen notwendig, einen Aufschluss durch physikalische, chemische oder enzymatische Behandlung vorzunehmen, z. B. Hydrolyse mit Säuren oder Laugen, Fermentation mit Hefen, Bakterien oder Enzymen, Extraktionsverfahren zur Entfernung von Nebenbestandteilen, Koagulation aus Extrakten durch Erhitzen, Zugabe von Elektrolyt, pH-Einstellung oder Zugabe von Fällungsmitteln. Reine Produkte können z. B. durch fraktioniertes Lösen und Fällung oder durch Dialyse hergestellt werden.

Bevorzugte Polypetide B2) haben ein mittleres Molekulargewicht größer 1000 Dalton, insbesondere größer 3000 Dalton und sind vorzugsweise ausgewählt aus der Gruppe bestehend aus einem tierischen Polypeptid, pflanzlichen Polypeptid und deren Hydrolysaten.

Derartige Molekulargewichte zeigen, dass gemäß der Erfindung Hydrolysate verwendet werden können ohne die Notwendigkeit, einen hohen Hydrolysierungsgrad einstellen zu müssen.

Besonders bevorzugt umfasst B2) recycelte Lederabfälle durch Hydrolyse, Proteinextrakt aus entfetteten Ölsaaten wie Soja, Milchprotein und pflanzliche Proteine aus Weizen oder Reis.

Weiter bevorzugt kann es vorgesehen sein, dass das Polypeptid aufgearbeitete, etwa basisch oder enzymatisch aufgearbeitete, Falzspäne von chrom- oder chromfrei gegerbter Rindshaut umfasst. Insbesondere ist die Wiederverwendung von chromhaltigen Falzspänen als eines der während der Lederherstellung anfallenden Reststoffe aus ökologisch Sicht interessant. Diese Falzspäne fallen bei der Lederherstellung bei der Einstellung der Dicke, dem sogenannten Falzen, als kleine Hobelspäne an, die hauptsächlich aus kollagenhaltigem Material bestehen. Sofern die Gerbung des Leders zuvor mittels eines Chromgerbstoffes erfolgte, enthält das noch feuchte mit Chrom gegerbte Leder, auch als Wet-Blue bezeichnet, neben Kollagen üblicherweise ca. 2 bis 6 Gew.-% Chrom in der Oxidationsstufe (III). Da die Chromgerbung die am weitesten verbreitete Gerbmethode darstellt, fallen somit große Abfallmengen an chromhaltigen Lederfalzspäne an (allein in Deutschland ca. 17.000 t pro Jahr). Ein Trennen in die Bestandteile Protein und Chrom und vor allem die nur mit hohem Aufwand mögliche Wiederverwendung des Chromanteils macht das vollständige Recycling der großen Abfallmengen oft unwirtschaftlich, so dass Lederfalzspäne in Gänze als Sondermüll deponiert und entsorgt, zu Lederfaserstoff gepresst oder unter kontrollierten Bedingungen verbrannt werden, was jedoch zu Lasten der Umwelt geht. Gängige Methoden der Auftrennung von Protein und Chrom beinhalten die Zersetzung der Lederfalzspäne mit Säuren oder Basen und/oder mikrobiellem bzw. enzymatischem Abbau unter Hitze, wobei diese Schritte meist in einem aufwendigen, mehrstufigen Prozess miteinander kombiniert sind. Durch die in EP 3425069 gewählte Saure Hydrolyse der Falzspäne ist eine aufwendige Vorbehandlung von chromhaltigem Material notwendig um vor der Hydrolyse das komplette Chrom aus dem Ausgangsmaterial zu entfernen. Konsequenterweise dauert die Vorbehandlung der chromhaltigen Falzspäne zwischen 2 - 4 Tagen. Dies macht den beschriebenen Prozess für chromhaltiges Material aufwendig und sehr zeitintensiv.

Bei Verwendung von chromhaltigen Falzspänen kann aufgrund der Möglichkeit der Hydrolyse mit Base und/oder mikrobiellem bzw. enzymatischem Abbau unter Hitze auf eine aufwendige Vorbehandlung der chromhaltigen Lederfalzspäne zur Trennung von Chrom und Proteinanteil verzichtet werden. Da Chrom bei einem pH-Wert von > 4,5 unlöslich wird, kann der verbleibende feste, chromhaltige Rückstand durch einfache Filtration von dem flüssigen proteinhaltigen Filtrat getrennt werden. Das proteinhaltige Filtrat kann dann als Ausgangsmaterial genommen werden in der anschließenden Pfropfpolymerisate wie sie z.B. in WO2012/163823 oder DE4416877 beschrieben werden.

### Herstellungsprozess der Pfropfpolymere

Zur Herstellung der Pfropfpolymerisate werden die Monomere A vorteilhaft in Gegenwart von Verbindungen der Saccharidkomponente B1) und/oder der Proteinkomponente B2) einer radikalischen Polymerisation unterworfen. In einigen Fällen kann es für die Wirkung des resultierenden Pfropfpolymers vorteilhaft sein, zwei oder mehr der unter B1) genannten Verbindungen oder zwei oder mehr der unter B2 genannten Verbindungen einzusetzen. Zu B1) können beispielsweise Mischungen aus säurekatalytisch oder enzymatisch abgebauter Stärke und Gluconsäure, Mischungen aus einem Monosaccharid und einem Oligosaccharid, Mischungen aus einer enzymatisch abgebauten Stärke und einem Monosaccharid oder Mischungen aus Glucose und Saccharose oder Mannose genannt werden. Für B2) sind Mischungen aus Lederabfallhydrolysat und pflanzlichen Proteinen aus Weizen oder Reis, die Mischungen aus Knochenleim und Milchprotein oder die Mischung aus Sojaprotein und Federhydrolysat zu nennen. Die Polymerisation kann in Gegenwart oder Abwesenheit von inerten Lösungsmitteln oder inerten Verdünnungsmitteln durchgeführt werden. Da die Polymerisation in Abwesenheit von inerten Lösungs- oder Verdünnungsmitteln in manchen Fällen zu ungleichmäßigen Pfropfpolymeren führt, wird die Pfropfpolymerisation in einem inerten Lösungs- oder Verdünnungsmittel bevorzugt. Geeignet sind z. B. solche inerten Verdünnungsmittel, in denen die unter B1) oder B2) genannten Verbindungen suspendiert werden können und die die Monomere A lösen, in diesen Fällen liegen die Pfropfpolymerisate nach der Polymerisation in suspendierter Form vor und lassen sich durch Filtration leicht in fester Form isolieren.

Geeignete inerte Verdünnungsmittel sind z. B. Toluol, o-, m- und p-Xylol und deren Isomerengemische, Ethylbenzol, aliphatische Kohlenwasserstoffe oder Benzinfraktionen, die keine polymerisierbaren Monomere enthalten. Chlorkohlenwasserstoffe, wie Chloroform, Tetrachlorkohlenstoff, Hexachlorethan, Dichlorethan und Tetrachlorethan, sind ebenfalls geeignet.

Bei dem oben beschriebenen Verfahren, bei dem die Komponente B1) bzw. B2) in einem inerten Verdünnungsmittel suspendiert wird, werden bevorzugt wasserfreie Verbindungen der Komponente B1) bzw. B2) eingesetzt, wobei bevorzugt Anhydride von Dicarbonsäuren aus der Gruppe (b) der Monomeren A verwendet werden. Ein bevorzugtes Verfahren zur Herstellung der Pfropfpolymerisate ist die Lösungspolymerisation, wobei die Polysaccharidkomponente B1) bzw. B2), die Monomeren A und das resultierende Pfropfcopolymer zumindest in disperser Form und in vielen Fällen in gelöster Form vorliegen. Für die Lösungspolymerisation eignen sich beispielsweise inerte Lösungsmittel wie Wasser, Methanol, Ethanol, Isopropanol, n-Propanol, n-Butanol, sec-Butanol, Tetrahydrofuran, Dioxan und Mischungen davon.

Die Polymerisation kann kontinuierlich oder chargenweise durchgeführt werden. Wie bereits erwähnt, können die Komponenten A und B1) oder B2) auch in Abwesenheit von inerten Verdünnungsmitteln oder Lösungsmitteln polymerisiert werden. Besonders geeignet ist hierfür die kontinuierliche Polymerisation bei 160 bis 250° C. Falls erforderlich, kann hier auch in Abwesenheit von Polymerisationsinitiatoren vorgegangen werden. Bevorzugt werden jedoch auch hier Katalysatoren eingesetzt, die unter den Polymerisationsbedingungen freie Radikale bilden, z. B. anorganische und organische Peroxide, Persulfate, Azoverbindungen und Redoxkatalysatoren. Die beschriebenen, vorzugsweise wasserlöslichen Pfropfpolymerisate werden in der Regel in Gegenwart von Radikalinitiatoren hergestellt. Bevorzugte Radikalinitiatoren sind alle Verbindungen, die bei der jeweils gewählten Polymerisationstemperatur eine Halbwertszeit von weniger als 3 Stunden aufweisen. Wird die Polymerisation zunächst bei einer niedrigeren Temperatur eingeleitet und bei einer höheren Temperatur abgeschlossen, ist es vorteilhaft, die Reaktion mit mindestens zwei Initiatoren durchzuführen, die sich bei unterschiedlichen Temperaturen zersetzen, d. h. zunächst einen Initiator, der sich bei einer niedrigeren Temperatur zersetzt, zur Einleitung der Polymerisation zu verwenden und dann die Hauptpolymerisation mit einem Initiator abzuschließen, der sich bei einer höheren Temperatur zersetzt. Es können wasserlösliche und wasserunlösliche Initiatoren oder Mischungen aus wasserlöslichen und wasserunlöslichen Initiatoren verwendet werden. Die wasserunlöslichen Initiatoren sind dann in der organischen Phase löslich.

Für die Temperatur 40°C bis 60°C können folgende Initiatoren vorteilhaft eingesetzt werden: Acetylcyclohexansulfonylperoxid, Diacetylperoxydicarbonat, Dicyclohexylperoxydicarbonat, Di-2-ethylhexylperoxydicarbonat, tert-Butylperneodecanoat, 2,2'-Phenylpropionamidindihydrochlorid, 2,2'-Azobis(2-methylpropionamidin)dihydrochlorid. Für die Temperatur größer 60°C bis 80° C können vorteilhaft folgende Initiatoren verwendet werden: tert-Butylperpivalat, Dioctanoylperoxid, Dilauroylperoxid, 2,2'-Azobis(2,4-, 5-dimethylvaleronitril).

Für die Temperatur größer 80°C bis 100° C können vorteilhaft die folgenden Initiatoren verwendet werden: Dibenzoylperoxid, tert-Butylper-2-ethylhexanoat, tert-Butylpermaleat, 2,2'-Azobisisobutyronitril, Dimethyl-2,2'-azobisisobutyrat, Natriumpersulfat, Kaliumpersulfat, Ammoniumpersulfat.

Für die Temperatur größer 100°C bis 120° C können vorteilhaft die folgenden Initiatoren verwendet werden: Bis(tert-butylperoxy)cyclohexan, tert-Butylperoxyisopropylcarbonat, tert-Butylperacetat, Wasserstoffperoxid.

Für die Temperatur größer 120°C bis 140° C können vorteilhaft die folgenden Initiatoren verwendet werden: 2,2-Bis(tert-butylperoxy)butan, Dicumylperoxid, Di-tert-amylperoxid, Di-tert 5- butylperoxid.

Für die Temperatur größer 140°C können vorteilhaft die folgenden Initiatoren verwendet werden: p-Menthanhydroperoxid, Pinanhydroperoxid, Cumolhydroperoxid und tert-Butylhydroperoxid. Werden neben den genannten Initiatoren auch Salze oder Komplexe von Schwermetallen, z.B. Kupfer-, Kobalt-, Mangan-, Eisen-, Vanadium-, Cer-, Nickel- und Chromsalze, oder organische Verbindungen, wie z.B. Benzoin, Dimethylanilin oder Ascorbinsäure, entweder allein als Pfropfmittel oder als Hilfsmittel für radikalische Initiatoren verwendet. Bei Verwendung mit Radikalinitiatoren können die Halbwertszeiten der genannten Radikalinitiatoren reduziert werden. So kann z. B. tert-Butylhydroperoxid durch Zugabe von 5 ppm Kupfer(II)-acetylacetonat aktiviert werden, so dass die Polymerisation schon bei 100 °C erfolgen kann: Die reduzierende Komponente der Redoxkatalysatoren kann z. B. auch durch Verbindungen wie Natriumsulfit, Natriumbisulfit, Natriumformaldehydsulfoxyat und Hydrazin bereitgestellt werden.

0,01 bis 20 Gew.-%, vorzugsweise 0,05 bis 15 Gew.-%, bezogen auf die bei der Polymerisation eingesetzten Monomere A, eines Polymerisationsinitiators oder eines Gemisches aus mehreren Polymerisationsinitiatoren, Radikalinitiatoren oder Pfropfmitteln auf Schwermetallbasis, werden vorzugsweise verwendet. Als Redoxkomponenten werden 0,01 bis 30 Gew.-%, bezogen auf die bei der Polymerisation eingesetzten Monomere A, der reduzierenden Verbindungen zugesetzt, Schwermetalle werden in einer Menge von 0,1 bis 100 ppm, vorzugsweise von 0,5 bis 10 ppm eingesetzt, bezogen auf die bei der Polymerisation eingesetzten Monomere A. Es ist auch vorteilhaft, eine Kombination aus Peroxid, Reduktionsmittel und Schwermetall als Redoxkatalysator einzusetzen.

Die Polymerisation der Monomere A kann auch unter Einwirkung von ultravioletter Strahlung, in Gegenwart oder Abwesenheit der UV-Initiatoren, durchgeführt werden. Für die Polymerisation unter Einwirkung von UV-Strahlung werden die üblichen Photoinitiatoren oder Sensibilisatoren verwendet. Dies sind z. B. Verbindungen wie Benzoin und Benzoinether, α-Methylbenzoin und α-Phenylbenzoin. Auch Triplettsensibilisatoren, wie Benzyldiketale, können verwendet werden. Als UV-Strahlungsquellen kommen neben energiereichen UV-Lampen, wie z. B. Kohlebogenlampen, Quecksilberdampflampen oder Xenonlampen, z. B. Nieder-UV-Lichtquellen, wie Leuchtstoffröhren mit hohem Blauanteil, in Frage.

Das bevorzugte Verfahren zur Herstellung von Pfropfpolymerisaten gemäß der vorliegenden Erfindung, bei dem die Komponente B1) oder B2) als Kern verwendet wird, ist die radikalisch induzierte Copolymerisation, bei der die Komponenten der Monomere von A) in einem inerten Lösungsmittel bei einer Temperatur von 40 °C bis 180 °C in Gegenwart eines radikalbildenden Initiators zu B1) oder B2) zugegeben werden, dadurch gekennzeichnet, dass mindestens 50 Gew.-%, insbesondere mehr als 70 Gew.-% des radikalbildenden Initiators mit der Komponente B1) oder B2) vor der Zugabe der Monomeren A) vorliegen und der Rest zusammen mit den Monomeren von A) oder danach zugegeben wird.

Vorzugsweise wird der Rest des Initiators dem Reaktionsgemisch zusammen mit den Monomeren von A) zugegeben.

Bei der Pfropfpolymerisation kann ein Polymerisationsregler verwendet werden, um die Seitenkettenlängen nach Bedarf zu regulieren. Als Kettenüberträger kann jede Verbindung, die aktiven Wasserstoff enthält, verwendet werden. Geeignete Regulatoren sind z.B. Mercapto-Verbindungen, wie Mercapto-Alkohole, Mercapto-Säuren oder Mercapto-Ester. Weitere geeignete Regulatoren sind Allylalkohole, Aldehyde, Ameisensäure, Amine oder deren Salze. Bei Bedarf können 0,05-10 Gew.-%, bezogen auf die Menge der Monomere A, eingesetzt werden.

Die anderen Bedingungen für die Pfropfpolymerisation folgen dem üblichen Verfahren für einen solchen Prozess. Das Polymerisationssystem sollte in einer Inertgasatmosphäre unter Ausschluss von Luftsauerstoff stehen. Die wasserlösliche Phosphorverbindung mit der Oxidationsstufe 1-4 kann verwendet werden, um die Farbe des resultierenden Pfropfpolymers zu reduzieren, während die Temperatur und die Produktgleichmäßigkeit durch angemessenes Mischen und Begrenzung der Zugabegeschwindigkeit der Monomermischung A kontrolliert werden können.

Wie bereits erwähnt, ist es auch möglich, Polysaccharide B1) in wässriger Suspension der Pfropfpolymerisation zu unterziehen. Vorzugsweise werden jedoch Pfropfpolymerisate aus Polysacchariden hergestellt, indem man zunächst ein wasserunlösliches Polysaccharid in wässriger Suspension unter Zugabe von Enzymen und/oder Säuren in eine wasserlösliche Form überführt und die resultierende wässrige Lösung des abgebauten Polysaccharids der Pfropfpolymerisation unterwirft. Hierbei wird ein wasserunlösliches Polysaccharid, z.B. Kartoffelstärke, zunächst in Wasser suspendiert und abgebaut. Dieser Abbau kann unter Einwirkung von Enzymen, z. B. α- oder β-Amylase, oder von Debranching-Enzymen, z B. Pullulanase, oder durch Einwirkung von anorganischen oder organischen Säuren in bekannter Weise erfolgen. Beispiele für geeignete anorganische Säuren sind Phosphorsäure, Schwefelsäure, Salzsäure und Salpetersäure. Beispiele für geeignete organische Säuren sind gesättigte oder ungesättigte Carbonsäuren, z. B. Ameisensäure, Essigsäure, Propionsäure, Acrylsäure, Methacrylsäure, Maleinsäure, Iraconsäure, p-Toluolsulfonsäure und Benzolsulfonsäure.

Der enzymatische Abbau der Stärke wird bei 30 °C bis 120 °C durchgeführt, der hydrolytische Abbau der Stärke erfolgt bei 50 °C bis 150 °C. Für den hydrolytischen Abbau werden etwa 5 Minuten bis 10 Stunden benötigt, wobei der Grad des hydrolytischen Abbaus der Stärke von der gewählten Temperatur, dem pH-Wert und der Zeit abhängt.

Bei der Pfropfpolymerisation liegen die Temperaturen üblicherweise zwischen 40 °C und 180 °C, vorzugsweise zwischen 60 °C und 150 °C. Sobald die Temperatur bei der Polymerisation oberhalb der Siedepunkte des inerten Verdünnungs- oder Lösungsmittels oder der Monomere A liegt, wird die Polymerisation unter Druck durchgeführt. Die Konzentration der Komponenten A und B1) oder B2) bei der Polymerisation in Gegenwart von inerten Lösungsmitteln oder inerten Verdünnern beträgt 10 bis 80, vorzugsweise 20 bis 70 Gew.-%.

Die Herstellung der Pfropfpolymerisate kann in den üblichen Polymerisationsapparaturen erfolgen. Dazu werden z. B. Rührkessel verwendet, die mit Anker-, Paddel- oder Impellerrührern oder mehrstufigen Impuls-Gegenstromrührern ausgestattet sind. Insbesondere bei der Pfropfpolymerisation in Abwesenheit von Verdünnungsmitteln kann es vorteilhaft sein, die Polymerisation in einem Kneter durchzuführen. Es kann auch notwendig sein, die Polymerisation in einem Kneter durchzuführen, wenn das Verfahren bei hohen Konzentrationen durchgeführt wird oder wenn die Naturstoffe hohe Molekulargewichte haben und zunächst stark quellen.

In einer bevorzugten Ausgestaltung kann das Pfropfpolymerisat erhältlich sein durch Radikalpolymerisation von Acrylsäure, Polypeptid-Hydrolysat und Polysaccharid-Hydrolysat. Beispielsweise kann die zur Herstellung des Pfropfpolymerisats verwendete Monomerenmischung aus Acrylsäure, Polypeptid-Hydrolysat und Polysaccharid-Hydrolysat bestehen, also keine weiteren Monomere außer den vorgenannten aufweisen.

Die nach dem Verfahren der vorliegenden Erfindung erhaltenen wässrigen Pfropfpolymerisatlösungen oder -dispersionen können direkt als Mittel für die Entkälkung bei der Herstellung von Leder und Häuten eingesetzt werden. Sie können aber auch weitere Zusatzstoffe enthalten und auch mit oder ohne weitere Zusatzstoffe getrocknet werden, z. B. durch Sprühtrocknung.

Die Pfropfpolymerisate, die nach den oben genannten Verfahren hergestellt werden können, sind farblose bis bräunliche Produkte. Im Falle der Polymerisation in wässrigem Medium liegen sie in Form von Dispersionen oder Polymerlösungen vor. In Abhängigkeit von der jeweiligen Zusammensetzung bzw. Konzentration der Pfropfpolymerisate handelt es sich bei den Produkten um niedrigviskose bis pastöse wässrige Lösungen oder Dispersionen. Aufgrund des Gehalts an Naturstoffen sind die beschriebenen Pfropfpolymerisate leichter biologisch abbaubar als die bisher verwendeten Polymere auf Basis ethylenisch ungesättigter Monomere, können aber zumindest mit dem Klärschlamm aus dem Abwasser von Kläranlagen eliminiert werden.

Die so erhältlichen wässrigen Pfropfpolymerisatlösungen eignen sich sehr gut als Entkälkungsmittel für die Herstellung von Leder und Häuten.

So können die erfindungsgemäßen Pfropfpolymerisate für die Entkälkung von Häuten in wässriger Flotte eingesetzt werden. Besonders vorteilhaft werden für diese Anwendungen Pfropfpolymerisate eingesetzt, die aus Acrylsäure oder deren Salzen allein oder aus einer Monomermischung A aus Acrylsäure oder deren Salzen (a) und Monomeren (b) mit mindestens 80, insbesondere mindestens 98 Gew.-% von (a) aufgebaut sind.

Grundsätzlich kann es bevorzugt sein, dass das Pfropfpolymerisat erhältlich ist durch Radikalpolymerisation von
A) einem Monomer, ausgewählt aus oder einer Monomerenmischung von
   (a) 20 bis 100 Gew.- Acrylsäure oder Methacrylsäure oder einem Gemisch davon oder der Alkalimetall-, Erdalkalimetall- oder Ammoniumsalze davon, bezogen auf das Monomer A,
   (b) 0 bis 80 Gew.-% anderer monoethylenisch ungesättigter' Monomere, die mit dem. Monomer (a) copolymerisierbar sind, bezogen auf das Monomer A, und
   (c) 0 bis 5 Gew.-% Monomere mit mindestens zwei ethylenisch ungesättigten, nichtkonjugierten Doppelbindungen im Molekül, bezogen auf das Monomer A, in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen, vorzugsweise
in einem Gewichtsverhältnis A:(B1 + B2) von 60 : 40 bis 1 : 99.

Mit Bezug auf weitere Vorteile und technische Merkmale der Entkälkungszusammensetzung wird auf die Ausführungen betreffend das Entkälkungsverfahren, das Verfahren zum Herstellen eines Leders, die Verwendung und die Beispiele Bezug genommen, und umgekehrt.

Beschrieben wird ferner ein Entkälkungsverfahren zum Entkälken einer zu entkälkenden Haut, insbesondere wobei das Entkälken das Reduzieren des pH-Werts einer zu entkälkenden Haut umfasst. Das Verfahren ist dadurch gekennzeichnet, dass das Verfahren wenigstens die folgenden Verfahrensschritte umfasst:
a) Bereitstellen einer zu entkälkenden Haut; und
b) Versetzen der zu entkälkenden Haut mit einem Entkälkungsmittel, wobei das Entkälkungsmittel ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt, erhältlich durch Radikalpolymerisation von
A) einem Monomer, ausgewählt aus oder einer Monomerenmischung von
   (a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
   (b) andere monoethylenisch ungesättigter Monomere, die mit dem Monomer (a) copolymerisierbar sind, umfassen, und wobei
   (c) Monomere mit mindestens zwei ethylenisch ungesättigten, nichtkonjugierten Doppelbindungen im Molekül sind,
   in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

Ein derartiges Verfahren ist somit ein Entkälkungsverfahren, bei dem eine insbesondere zuvor geäscherte Haut von Äschersubstanzen befreit werden soll und wobei insbesondere der pH-Wert der Haut auf einen im Wesentlichen neutralen Bereich, insbesondere in einem Bereich von 7-9 gesenkt werden soll. Somit ist unter einer zu entkälkenden Haut insbesondere eine solche Haut zu verstehen, die einen pH-Wert im basischen Bereich insbesondere in einem pH-Wert-Bereich von größer als 9, insbesondere größer oder gleich 10, etwa größer oder gleich 11 aufweist.

Das der Erfindung zugrundeliegende Verfahren entspricht insbesondere einem dem Fachmann an sich bekannten Verfahren zum Entkälken von Häuten, wobei jedoch als Entkälkungsmittel die beschriebenen Pfropfpolymerisate verwendet werden.

Das Verfahren kann im ersten Schritt eine sogenannte Vorentkälkung beinhalten unter Verwendung von Puffersalzen und/oder Säuren. Es kann jedoch auch auf die sogenannte Vorentkälkung verzichtet werden. Dann umfasst das beschriebene Verfahren beispielsweise die folgenden Schritte: a) man wäscht die bereitgestellte zu entkälkende Haut mit Wasser und lässt das Wasser wieder ab, fügt anschließend Wasser, Natriumbisulfit und ein Entkälkungsmittel bestehend aus einer organischen Säure hinzu; b) fügt das Entkälkungsmittel auf Basis der Pfropfpolymerisate hinzu und optional aber in keiner Weise zwingend eine geringe Menge an Ammoniumsalz und detektiert während des Verlaufs den pH-Wert; c) sobald der Querschnitt der Haut mit Phenolphthalein, keine Färbung mehr zeigt ist der Prozess beendet. Somit besteht der Vorteil des beschriebenen Verfahrens darin, dass die Verwendung von Ammoniumsalzen in einem Entkälkungsprozess vermieden bzw. reduziert werden kann durch Verwendung von Pfropfpolymerisate basierend auf natürlichen Polymeren. Der Einsatz von nachwachsenden Rohstoffen und die Reduzierung der Ammoniumsalze im Abwasser führt zu erheblichen ökologischen und ökonomischen Vorteilen. Bei Verwendung von während der Lederherstellung anfallenden Reststoffen wie z.B. Haare und Falzspäne als Ausgangsstoff für die Pfropfpolymerisate ergebenen sich zusätzlich zur Reduktion der Abfallmenge auch logistischen Vorteilen für die Gerbereien.

Bevorzugt kann bei Verfahrensschritt b) das Entkälkungsmittel in einem Anteil von ≥ 0,5 Gew.-% bis ≤ 12 Gew.-%, bevorzugt ≥ 1,5 Gew.-% bis ≤ 8 Gew.-%, etwa ≥ 2 Gew.-% bis ≤ 6 Gew.-%, bevorzugt ≥ 2,5 Gew.-% bis ≤ 5 Gew.-%, bezogen auf die Menge der geäscherten Blöße, hinzugegeben werden. Es hat sich gezeigt, dass insbesondere in einem derartigen Anteil des Entkälkungsmittels dieses effektiv ein Entkälken ermöglichen kann, ohne dabei jedoch den pH-Wert lokal zu stark zu verändern. Insbesondere kann die wie vorstehend beschrieben nachteilige lokale Herabsetzung des pH-Werts bis in einen sehr sauren Bereich verhindert werden.

Mit Bezug auf weitere Vorteile und technische Merkmale des Entkälkungsverfahrens wird auf die Ausführungen betreffend die Entkälkungszusammensetzung, das Verfahren zum Herstellen von Leder, die Verwendung und die Beispiele Bezug genommen, und umgekehrt.

Weiter beschrieben ist ein Verfahren zum Herstellen von Leder, aufweisend die Verfahrensschritte:
i) Bereitstellen einer Rohhaut;
ii) Äschern oder Schwöden der Rohhaut;
iii) Entkälken der Rohhaut; und
iv) Gerben der Rohhaut,
wobei das Verfahren dadurch gekennzeichnet ist, dass das Entkälken der Rohhaut gemäß Verfahrensschritt iii) unter Verwendung eines Entkälkungsmittels durchgeführt wird, das ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt, erhältlich durch Radikalpolymerisation von
A) einem Monomer, ausgewählt aus oder einer Monomerenmischung von
   (a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
   (b) andere monoethylenisch ungesättigter Monomere, die mit dem Monomer (a) copolymerisierbar sind, als die Monomere (a), umfassen, und wobei
   (c) Monomere mit mindestens zwei ethylenisch ungesättigten, nichtkonjugierten Doppelbindungen im Molekül umfassen,
   in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

Dabei kann das Verfahren grundsätzlich auch weitere dem Fachmann grundsätzlich bekannte Verfahrensschritte im Rahmen einer Lederherstellung aufweisen, ohne den Rahmen der Erfindung zu verlassen. Beispiele für derartige weitere optionale Verfahrensschritte umfassen etwa das Weichen, Spalten, Beizen, Falzen, Färben, Trocknen, ohne jedoch hierauf beschränkt zu sein. Auch diese Schritte können in für den Fachmann bekannter Weise durchgeführt werden.

Wie vorstehend beschrieben lassen sich durch die Verwendung des Entkälkungsmittels signifikante Vorteile erreichen hinsichtlich ökologischer und ökonomischer Gesichtspunkte.

Die weiteren beschriebenen Verfahrensschritte, wie insbesondere das Äschern oder das Gerben können weiterhin grundsätzlich in an sich bekannter Weise durchgeführt werden.

Das Äschern von Häuten zum Zweck der Enthaarung und des Hautaufschlusses, etwa dem Entfernen von unerwünschten Proteinen, im Rahmen der Lederherstellung erfolgt insbesondere im alkalischen Medium, meist mit Hilfe von anorganischen oder auch organischen Sulfiden bei einem pH-Wert von 12 oder höher. Als alkalisches Agens wird normalerweise Kalk, in der Regel allein, gelegentlich aber auch in Mischung mit Natronlauge oder Soda, eingesetzt. Grundsätzlich ist das Äschern dem Fachmann jedoch bekannt.

Anschließend erfolgt dann das Entkälken wie vorstehend beschrieben.

Dem Entkälken anschließend kann dann das Gerben erfolgen.

Auch das Gerben kann in an sich bekannter Weise durchgeführt werden. Grundsätzlich bekannter Weise wird als Gerbung der Konservierungsprozess der Tierhaut mit oder ohne Haare mittels Gerbstoffen verstanden. Bei der Gerbung gehen die Gerbstoffe eine chemische Verbindung mit dem Fasergefüge der Tierhaut ein, die die Verhärtung und den Verfall des Fasergefüges der Haut verhindert und die Tierhaut langfristig stabilisiert bzw. vor Oxidation bzw. Verwesung schützt. Dabei kann grundsätzlich jegliche Art der Gerbung von dem hier beschriebenen Verfahren umfasst sein. Beispielhafte Gerbstoffe umfassen beispielsweise bei der Chromgerbung 33%iges basisches Chromsulfat mit einem Chrom(III)-Oxid-Gehalt von etwa 26% verwendet. Dies hat etwa den Vorteil, dass die Verwendung von Chrom (III)-Salzen als gesundheitlich unbedenklich gilt und bei den allermeisten Menschen trotz intensiven Hautkontaktes im Schuh- oder Bekleidungsbereich keinerlei Schwierigkeiten aufwirft.

Insbesondere kann das Gerben frei sein von den Pfropfpolymerisaten, wie sie vorstehend mit Bezug auf das Entkälkungsverfahren beziehungsweise die Entkälkungszusammensetzung beschrieben sind. Es kann jedoch auch vorgesehen sein, dass das Gerben mit den vorbeschriebenen Pfropfpolymerisaten durchgeführt wird.

Mit Bezug auf weitere Vorteile und technische Merkmale des Verfahrens zum Herstellen von Leder wird auf die Ausführungen betreffend die Entkälkungszusammensetzung, das Entkälkungsverfahren, die Verwendung und die Beispiele Bezug genommen, und umgekehrt.

Dem Vorstehenden folgend ist weiterhin Gegenstand der vorliegenden Erfindung eine Verwendung eines vorstehend beschriebenen Pfropfpolymerisats und damit etwa einer Entkälkungszusammensetzung wie vorstehend beschrieben und/oder eines Entkälkungsverfahrens wie vorstehend beschrieben zum Entkälken von Häuten.

Eine derartige Verwendung liefert deutliche Vorteile in ökonomischer und ökologischer Hinsicht.

Mit Bezug auf weitere Vorteile und technische Merkmale der Verwendung wird auf die Ausführungen betreffend die Entkälkungszusammensetzung, das Verfahren zum Herstellen von Leder, das Entkälkungsverfahren, und die Beispiele Bezug genommen, und umgekehrt.

Dem Vorstehenden folgend ist weiterhin Gegenstand der vorliegenden Erfindung ein Halbzeug der Lederherstellung, das mit einem Pfropfpolymer entkälkt ist. Das Pfropfpolymer ist dadurch gekennzeichnet, dass es ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo-oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
   (a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
   (b) andere monoethylenisch ungesättigter Monomere, die mit dem Monomer (a) copolymerisierbar sind, als die Monomere (a), umfassen, und wobei
   (c) Monomere mit mindestens zwei ethylenisch ungesättigten, nichtkonjugierten Doppelbindungen im Molekül umfassen,
   in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

Ein derartiges Halbzeug der Lederherstellung liefert deutliche Vorteile in ökonomischer und ökologischer Hinsicht betreffend seine Herstellung.

Das Halbzeug kann dabei insbesondere ein solches sein, das unmittelbar durch die Entkälkung entsteht und noch nicht gegerbt ist. Beispielsweise kann das entkälkte und noch nicht gegerbte Halbzeug noch in einer Lösung umfassend das Pfropfpolymer angeordnet sein.

Mit Bezug auf weitere Vorteile und technische Merkmale des Halbzeugs wird auf die Ausführungen betreffend die Verwendung, die Entkälkungszusammensetzung, das Verfahren zum Herstellen von Leder, das Entkälkungsverfahren, und die Beispiele Bezug genommen, und umgekehrt.

### Beispiele

Anhand der nachfolgenden Beispiele wird die Erfindung näher erläutert, ohne dass dadurch eine Einschränkung der Erfindung bewirkt werden soll.

### Herstellung der Pfropfpolymerisate

Das in den folgenden Beispielen eingesetzte Proteinhydrolysat stammt aus einer gewerblich betriebenen Anlage zur basischen Aufarbeitung von Falzspäne von chrom- oder chromfrei gegerbter Rindshaut, bei welcher im ersten Fall ein chromhaltiges im zweiten Fall ein chromfreies Proteinhydrolysat anfällt. Im Falle des chromhaltigen Proteinhydrolysat wurde das Proteinhydrolysat vor der Verwendung filtriert, um den festen Chromrückstand vom flüssigen, proteinhaltigen Filtrat zu trennen. (Das Proteinhydrolysat kann ein mittleres Molekulargewicht zwischen ca. 1000 Dalton und 8000 Dalton besitzen, bevorzugt in einem Bereich von zwischen 2000 Dalton und 3000 Dalton.

Das verwendete Stärkehydrolysat stammt ebenfalls aus einer gewerblich betriebenen Anlage zur basischen/enzymatischen Aufarbeitung von Weizenmehl. (Das Stärkehydrolysat besitzt ein Molekulargewicht von ca. 3000 Dalton.)

Vorteil derartiger Molekulargewichte ist insbesondere ein möglicher niederiger Hydrolysierungsgrad.

### Allgemeine Vorschrift der Pfropfpolymerisation

Die entsprechende Menge Proteinhydrolysat 40 Gew.-% (in Wasser) und die entsprechende Menge Stärkehydrolysat 40 Gew.-% (in Wasser) wurden in einen 1-Liter-Reaktor gegeben. Der Inhalt des Reaktors wurde unter Rühren auf 88 - 92 °C erhitzt und die entsprechende Menge Wasserstoffperoxid (30%, Menge 1) zu der Mischung zugegeben und 15 min. gerührt. Darauffolgend wurde eine wässrige Lösung von Ammoniumpersulfat, (10%), die entsprechende Menge an 70%iger Acrylsäure (Hergestellt durch Verdünnung von Acrylsäure (98%) mit entsprechender Menge Wasser) und die entsprechende Menge Wasserstoffperoxid (30%, Menge 2) zugegeben. Nach 30 min. Reaktionszeit wurde nochmals Wasserstoffperoxid (30%, Menge 3) zugegeben und weitere 2 Stunden bei auf 88 - 92 °C gerührt. Nach Abkühlen des Inhaltes des Reaktors auf 40°C wurde 50 %ige Natriumhydroxidlösung langsam unter Rühren zugegeben, wobei darauf zu achten war, dass die Temperatur im Reaktor unter 60 °C gehalten wurde, bis ein pH-Wert zwischen 4 - 5 erreicht wurde. Das Endprodukt wurde erhalten, indem man den Reaktor unter Rühren auf Raumtemperatur abkühlen ließ, und es wurden Biozide zugegeben und gut vermischt.

### P1) Pfropfpolymer 1

Nach allgemeiner Vorschrift Pfropfpolymerisation 1

| **Material** | **Menge [g]** |
|---|---|
| Proteinhydrolysat (Quelle: Hydrolyse chromfreie Falzspäne) | 620,5 |
| Stärkehydrolysat | 142,6 |
| Wasserstoffperoxid (Menge 1) | 1,0 |
| Ammoniumpersulfat-Lösung | 6 |
| Acrylsäure | 42,6 |
| Wasserstoffperoxid (Menge 2) | 2,0 |
| Wasserstoffperoxid (Menge 3) | 2,0 |

### P2) Pfropfpolymer 2

Nach allgemeiner Vorschrift Pfropfpolymerisation

| **Material** | **Menge [g]** |
|---|---|
| Proteinhydrolysat (Quelle: Hydrolyse chromfreie Falzspäne) | 620,5 |
| Stärkehydrolysat | 142,6 |
| Wasserstoffperoxid (Menge 1) | 2,5 |
| Ammoniumpersulfat | 15 |
| Acrylsäure | 106,43 |
| Wasserstoffperoxid (Menge 2) | 5,0 |
| Wasserstoffperoxid (Menge 3) | 5,0 |

### P3) Pfropfpolymer 3

Nach allgemeiner Vorschrift Pfropfpolymerisation

| **Material** | **Menge [g]** |
|---|---|
| Proteinhydrolysat (Quelle: Hydrolyse chromhaltige Falzspäne) | 770,2 |
| Stärkehydrolysat | 0 |
| Wasserstoffperoxid (Menge 1) | 1,0 |
| Ammoniumpersulfat-Lösung | 6 |
| Acrylsäure | 42,6 |
| Wasserstoffperoxid (Menge 2) | 2,0 |
| Wasserstoffperoxid (Menge 3) | 2,0 |

### P4) Pfropfpolymer 4

Nach allgemeiner Vorschrift Pfropfpolymerisation

| **Material** | **Menge [g]** |
|---|---|
| Proteinhydrolysat (Quelle: Hydrolyse chromfreie Falzspäne) | 620,5 |
| Stärkehydrolysat | 142,6 |
| Wasserstoffperoxid (Menge 1) | 0,5 |
| Ammoniumpersulfat-Lösung | 3 |
| Acrylsäure | 21,3 |
| Wasserstoffperoxid (Menge 2) | 1,0 |
| Wasserstoffperoxid (Menge 3) | 1,0 |

### P5) Pfropfpolymer 5

Nach allgemeiner Vorschrift Pfropfpolymerisation 1

| **Material** | **Menge [g]** |
|---|---|
| Proteinhydrolysat (Quelle: Hydrolyse chromhaltige Falzspäne) | 620,5 |
| Stärkehydrolysat | 142,6 |
| Wasserstoffperoxid (Menge 1) | 1,0 |
| Ammoniumpersulfat-Lösung | 6 |
| Acrylsäure | 42,6 |
| Wasserstoffperoxid (Menge 2) | 2,0 |
| Wasserstoffperoxid (Menge 3) | 2,0 |

### P6) Pfropfpolymer 6

Nach allgemeiner Vorschrift Pfropfpolymerisation 1

| **Material** | **Menge [g]** |
|---|---|
| Proteinhydrolysat | 156,1 |
| Stärkehydrolysat | 565,3 |
| Wasserstoffperoxid (Menge 1) | 0,5 |
| Ammoniumpersulfat-Lösung | 3 |
| Acrylsäure | 21,3 |
| Wasserstoffperoxid (Menge 2) | 1,0 |
| Wasserstoffperoxid (Menge 3) | 1,0 |

### Anwendungstechnische Beispiele unter Verwendung der Pfropfpolymerisate

### Anwendungsbeispiel 1: Ammoniumfreie Entkälkung mit Pfropfpolymerisat 1

Als Ausgangsmaterial werden nach dem Äscher gespaltene und gewogene Blößen (Rind) eingesetzt, deren Dicke ca. 3,5 mm beträgt. Alle folgenden Chemikalien-Einsatzmengen beziehen sich auf dieses Bezugsgewicht (Blößengewicht).

Nach dem Fachmann bekannten, üblichen vorbereitenden Arbeiten werden die geäscherten Blößen mit 150% Wasser gewaschen. Anschließend wird 30% Wasser, 0,3% Natriumhydrogensulfit und 0,3% Peltec DL (Dicarbonsäuregemisch, kommerzielles Produkt von Lanxess) zugegeben. Nach 15 min. wird 5% des Pfropfpolymerisat von Beispiel 1 zugegeben und solange einwirken gelassen, bis der Querschnitt der Haut keine Färbung mit dem pH-Indikator Phenolpthalein mehr zeigt (pH < 8,2). In Tabelle 1 sind die Verfahrensschritte des erfindungsgemäßen Verfahrens dargestellt mit den sich anschließenden Schritten Beize und Gerbung zur Herstellung von Leder-Halbfabrikaten (die Gew.-% beziehen sind auf das Blößengewicht).

**Tabelle 1:**

| **Prozessschritt** | **Gew.%** | **Chemikalien** | **Laufzeit [min]** | **Bemerkungen** |
|---|---|---|---|---|
| Waschen | 150 | Wasser 32 °C | 15' | Flotte ablassen |
| | | | | |
| Entkälkung | 30 | Wasser 32 °C | | |
| | 0,3 | Natriumhydrogensulfit | | |
| | 0,3 | Peltec DL | 15 | |
| | 5,0 | Pfropfpolymerisat | 120 | Querschnitt Haut mit Phenolphthalein: farblos |
| Beize | 0,15 | PELTEC ADN | | |
| | 0,3 | Peltec BG | 60' | |
| | | | | Flotte ablassen |
| Gerbung | 50 | Wasser 20°C | | |
| | 6,0 | Kochsalz | 5' | |
| | 0,5 | Ameisensäure | 10' | |
| | 0,8 | Schwefelsäure | 90' | pH 3,4 |
| | 5,5 | Chromosal B | 30' | |
| | 0,1 | Preventol U-Tec G | 30' | |
| | 0,5 | BLANCOROL BA - I | 480' | |
| | | | | Automatik 40 °C |
| | | | | Flotte ablassen |

Nach dem erfindungsgemäßen Verfahren werden die Leder-Halbfabrikate auf einem Bock gelagert, abgewelkt und gefalzt und anschließend nach einer üblichen Methode zu fertigen Crust-Ledern weitergearbeitet. Diese Crust-Leder werden anschließend qualitativ beurteilt.
**Anwendungsbeispiel 2: Ammoniumfreie Entkälkung mit Pfropfpolymerisat 2**
   Wie Beispiel 1 nur mit 5% **Pfropfpolymerisat 2**
**Anwendungsbeispiel 3: Ammoniumreduzierte Entkälkung mit Pfropfpolymerisat 3**
   Wie Beispiel 1 nur das vor der Zugabe von 2,5% Pfropfpolymerisat 3, 0,5% Peltec DLA (Gemisch aus Ammoniumsalzen, kommerzielles Produkt von Lanxess AG) zugegeben wurde
**Anwendungsbeispiel 4: Ammoniumreduzierte Entkälkung mit Pfropfpolymerisat 4**
   Wie Beispiel 1 nur das vor der Zugabe von 2,5% Pfropfpolymerisat 4, 0,5% Peltec DLA (Gemisch aus Ammoniumsalzen, kommerzielles Produkt von Lanxess) zugegeben wurde
**Anwendungsbeispiel 5: Ammoniumreduzierte Entkälkung mit Pfropfpolymerisat 5**
   Wie Beispiel 1 nur das vor der Zugabe von 2,5% Pfropfpolymerisat 5, 0,5% Peltec DLA (Gemisch aus Ammoniumsalzen, kommerzielles Produkt von Lanxess) zugegeben wurde
**Anwendungsbeispiel 6: Ammoniumreduzierte Entkälkung mit Pfropfpolymerisat 6**
   Wie Beispiel 1 nur das vor der Zugabe von 2,5% Pfropfpolymerisat 6, 0,5% Peltec DLA (Gemisch aus Ammoniumsalzen, kommerzielles Produkt von Lanxess) zugegeben wurde
**Vergleichsbeispiel 1: Entkälkung mit Ammoniumsalzen**
   Wie Beispiel 1 nur das anstatt eines Pfropfpolymerisat, 2,0% Peltec DLA (Gemisch aus Ammoniumsalzen, kommerzielles Produkt von Lanxess) zugegeben wurde

**Tabelle 2:**

| Beispiel | NH₄-Salz | pH während der Entkälkung | | | Penetrationszeit | NH₄-N Anteil [ppm] |
|---|---|---|---|---|---|---|
| | | 30 min | 60 min | 120 min | | |
| 1 | frei | 6,9 | 8,5 | 8,8 | 120 | 220 |
| 2 | frei | 6,3 | 7,5 | 8,3 | 120 | 200 |
| 3 | red. | 7,6 | 8,3 | 8,5 | 75 | 990 |
| 4 | red. | 6,9 | 8,7 | 8,8 | 75 | 1075 |
| 5 | red. | 8,0 | 8,5 | 8,7 | 75 | 1090 |
| 6 | red. | 8,4 | 8,7 | 8,8 | 75 | 1020 |
| Vergleichsbeisipeil 1 | - | 8,2 | 8,3 | 8,3 | 75 | 4300 |

Wie in Tabelle 2 dargestellt, wurde bei der Entkälkung mit den Pfropfpolymerisaten alleine oder unter Einsatz einer zu dem Vergleichsbeispiel reduzierten Menge Ammoniumsalze spätestens nach 60 min ein ähnlicher pH-Wert wie bei dem Vergleichsbeispiel unter alleiniger Entkälkung mit Hilfe von Ammoniumsalzen erreicht. Der pH-Wert nach 30 min ist zwar in einigen Fällen etwas niedriger, aber weit weg von dem zu vermeidenden pH-Wert von ca. 5 (isoelektrischen Punkt von Eiweiß) und den damit verbundenen Qualitativen Problemen der fertigen Crust-Leder. Dies zeigt die gute Pufferwirkung der Substanzen. Der ähnliche pH-Wert um die 8.5 am Ende des Prozesses bedeutet, dass die Pfropfpolymerisate den Querschnitt der Haut genauso gut Neutralisieren können wie die Ammoniumsalze.

In jedem Fall wird bei Einsatz von Pfropfpolymerisaten, ob im ammoniumsalzfreien oder ammoniumsalzreduziertem Verfahren, der Ammoniumstickstoffiniert im Abwasser signifikant reduziert.

Der Wert von ca. 4300 ppm bei einer ammoniumsalzhaltigen Entkälkung wird mit dem ammoniumsalzfreien Verfahren auf einen Wert um die 200 ppm und im -reduziertem Verfahren auf ca. 1000 ppm gesenkt. Dies bedeutet eine Reduktion des Ammoniumgehaltes im Abwasser um 95% im 1. Fall und 75% für den 2. Fall im Vergleich zu einer ammoniumsalzhaltigen Entkälkung.

Im Falle ammoniumsalzfreien Verfahren sind die Penetrationszeiten zwar etwas länger im Vergleich zu einer ammoniumsalzhaltigen Entkälkung, aber für den Praktiker noch auf einem akzeptablen Niveau. Durch Mitverwendung einer stark reduzierten Menge Ammoniumsalz zusammen mit den Pfropfpolymerisaten gleicht sich die Prozesszeit an. Ersichtlich aus den Beispielen 3 -6.

Alle erhaltenen Crust-Leder, gefertigt aus den Häuten die Erhalten wurden in den Beispielen 1 - 6 haben eine gleichmäßige Farbe, einen weichen Griff und eine sehr feine Körnung. die vergleichbar ist mit dem aus dem Vergleichsbeispiel.

## Patentansprüche

1. Entkälkungszusammensetzung zum Entkälken von Häuten, **dadurch gekennzeichnet, dass** die Entkälkungszusammensetzung wenigstens aufweist:
- eine zu entkälkende Haut; und
- ein Entkälkungsmittel, wobei das Entkälkungsmittel
ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
(a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
(b) andere monoethylenisch ungesättigter Monomere, die mit dem Monomer (a) copolymerisierbar sind, als die Monomere (a), umfassen, und wobei
(c) Monomere mit mindestens zwei ethylenisch ungesättigten, nichtkonjugierten Doppelbindungen im Molekül umfassen,
in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo-oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

2. Entkälkungszusammensetzung nach Anspruch 1, **dadurch gekennzeichnet, dass** das Monomer A frei ist von den Monomeren (b) und (c).

3. Entkälkungszusammensetzung nach Anspruch 1, **dadurch gekennzeichnet, dass** die Monomerenmischung des Monomers (A) umfasst:
(a) Acrylsäure oder Methacrylsäure oder ein Gemisch davon oder der Alkalimetall-, Erdalkalimetall- oder Ammoniumsalze davon, und wenigstens eines von (b) und (c), wobei
(b) andere monoethylenisch ungesättigter Monomere, die mit dem Monomer (a) copolymerisierbar sind, als die Monomere (a), umfasst, und wobei
(c) Monomere mit mindestens zwei ethylenisch ungesättigten, nichtkonjugierten Doppelbindungen im Molekül umfassen.

4. Entkälkungszusammensetzung nach einem der Ansprüche 1 bis 3, **dadurch gekennzeichnet, dass** das Pfropfpolymerisat erhältlich ist durch Radikalpolymerisation von
A) einem Monomer, ausgewählt aus oder einer Monomerenmischung von
(a) 20 bis 100 Gew.- Acrylsäure oder Methacrylsäure oder einem Gemisch davon oder der Alkalimetall-, Erdalkalimetall- oder Ammoniumsalze davon, bezogen auf das Monomer A,
(b) 0 bis 80 Gew.-% anderer monoethylenisch ungesättigter' Monomere, die mit dem. Monomer (a) copolymerisierbar sind, bezogen auf das Monomer A, und
(c) 0 bis 5 Gew.-% Monomere mit mindestens zwei ethylenisch ungesättigten, nichtkonjugierten Doppelbindungen im Molekül, bezogen auf das Monomer A, in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

5. Entkälkungszusammensetzung nach einem der Ansprüche 1 bis 4, **dadurch gekennzeichnet, dass** das Pfropfpolymerisat erhältlich ist durch Radikalpolymerisation von Acrylsäure, Polypeptid-Hydrolysat und Polysaccharid-Hydrolysat.

6. Entkälkungszusammensetzung nach einem der Ansprüche 1 bis 5, **dadurch gekennzeichnet, dass** die Polysaccharide B1) ein mittleres Molekulargewicht im Bereich von 500 - 10000 Dalton, insbesondere 3000 bis 10000 Dalton, aufweisen.

7. Entkälkungszusammensetzung nach einem der Ansprüche 1 bis 6, **dadurch gekennzeichnet, dass** die Polysaccharide B1) hydrolytisch abgebaute Stärke umfassen.

8. Entkälkungszusammensetzung nach einem der Ansprüche 1 bis 7, **dadurch gekennzeichnet, dass** die Polypeptide B2) ein mittleres Molekulargewicht im Bereich von größer oder gleich 1000 Dalton, insbesondere größer oder gleich 3000, aufweisen.

9. Entkälkungszusammensetzung nach einem der Ansprüche 1 bis 8, **dadurch gekennzeichnet, dass** die Polypeptide B2) aufgearbeitete Falzspäne von chrom- oder chromfrei gegerbter Rindshaut umfassen.

10. Entkälkungsverfahren zum Entkälken einer zu entkälkenden Haut, **dadurch gekennzeichnet, dass** das Entkälkungsverfahren wenigstens die folgenden Verfahrensschritte umfasst:
a) Bereitstellen einer zu entkälkenden Haut; und
b) Versetzen der zu entkälkenden Haut mit einem Entkälkungsmittel, wobei das Entkälkungsmittel ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
(a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
(b) andere monoethylenisch ungesättigter Monomere, die mit dem Monomer (a) copolymerisierbar sind, als die Monomere (a), umfassen, und wobei
(c) Monomere mit mindestens zwei ethylenisch ungesättigten, nichtkonjugierten Doppelbindungen im Molekül umfassen,
in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

11. Entkälkungsverfahren nach Anspruch 10, **dadurch gekennzeichnet, dass** bei Verfahrensschritt b) das Entkälkungsmittel in einem Anteil von ≥ 0,5 Gew.-% bis ≤ 12 Gew.-% vorliegt, bezogen auf die Menge der zu entkälkenden Haut.

12. Verfahren zum Herstellen von Leder, aufweisend die Verfahrensschritte:
i) Bereitstellen einer Rohhaut;
ii) Äschern oder Schwöden der Rohhaut;
iii) Entkälken der Rohhaut; und
iv) Gerben der Rohhaut,
**dadurch gekennzeichnet, dass** das Entkälken der Rohhaut gemäß Verfahrensschritt iii) unter Verwendung eines Entkälkungsmittels durchgeführt wird, das ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo-oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
(a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
(b) andere monoethylenisch ungesättigter Monomere, die mit dem Monomer (a) copolymerisierbar sind, als die Monomere (a), umfassen, und wobei
(c) Monomere mit mindestens zwei ethylenisch ungesättigten, nichtkonjugierten Doppelbindungen im Molekül umfassen,
in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

13. Verwendung eines Pfropfpolymerisats zum Entkälken einer Haut, wobei das Pfropfpolymerisat ein Pfropfpolymerisat von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymerisat erhältlich ist durch Radikalpolymerisation von
A) einem Monomer, ausgewählt aus oder einer Monomerenmischung von
(a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
(b) andere monoethylenisch ungesättigter Monomere, die mit dem Monomer (a) copolymerisierbar sind, als die Monomere (a), umfassen, und wobei
(c) Monomere mit mindestens zwei ethylenisch ungesättigten, nichtkonjugierten Doppelbindungen im Molekül umfassen,
in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

14. Halbzeug der Lederherstellung, das mit einem Pfropfpolymer entkälkt ist, wobei das Pfropfpolymer ein Pfropfpolymer von wenigstens einem von Polysacchariden, Polypeptiden oder deren Derivaten aufweist, wobei es sich bei den Derivaten der Polysaccharide um oxidativ, hydrolytisch oder enzymatisch abgebaute Polysaccharide, oxidierte hydrolytisch abgebaute oder oxidierte enzymatisch abgebaute Polysaccharide oder derartige chemisch modifizierte abgebaute Produkte oder chemisch modifizierte Mono-, Oligo- oder Polysaccharide handelt und wobei es sich bei den Derivaten der Polypeptide um hydrolytisch oder enzymatisch abgebaute und gegebenenfalls chemisch modifizierte Polypeptide handelt,
wobei das Pfropfpolymer erhältlich ist durch Radikalpolymerisation von
A) einem Monomer, ausgewählt aus oder einer Monomerenmischung von
(a) Acrylsäure oder Methacrylsäure oder einem Gemisch davon oder der Alkalimetall-, Erdalkalimetall- oder Ammoniumsalze davon, und gegebenenfalls wenigstens einem von (b) und (c), wobei
(b) andere monoethylenisch ungesättigter Monomere, die mit dem Monomer (a) copolymerisierbar sind, als die Monomere (a), umfassen, und wobei
(c) Monomere mit mindestens zwei ethylenisch ungesättigten, nichtkonjugierten Doppelbindungen im Molekül sind,
in Gegenwart von wenigstens einem von
B1) Polysacchariden, oxidativ, hydrolytisch oder enzymatisch abgebauten Polysacchariden, oxidierten hydrolytisch abgebauten oder oxidierten enzymatisch abgebauten Polysacchariden oder derartigen chemisch modifizierten abgebauten Produkten, chemisch modifizierten Mono-, Oligo- oder Polysacchariden oder Gemischen der angegebenen Verbindungen und
B2) Polypeptiden, hydrolytisch oder enzymatisch abgebauten und gegebenenfalls chemisch modifizierten Polypeptiden oder Gemischen der angegebenen Verbindungen.

## Claims

1. Deliming composition for deliming hides, **characterized in that** the deliming composition at least comprises:
- a hide for deliming; and
- a deliming agent, the deliming agent comprising
a graft polymer of at least one of polysaccharides, polypeptides or derivatives thereof, wherein the derivatives of the polysaccharides are oxidatively, hydrolytically or enzymatically degraded polysaccharides, oxidized hydrolytically degraded or oxidized enzymatically degraded polysaccharides or suchlike chemically modified degraded products or chemically modified mono-, oligo- or polysaccharides and wherein the derivatives of the polypeptides are hydrolytically or enzymatically degraded and optionally chemically modified polypeptides,
the graft polymer being obtainable by radical polymerization of
A) a monomer selected from or a monomer mixture of
(a) acrylic acid or methacrylic acid or a mixture thereof or the alkali metal, alkaline earth metal or ammonium salts thereof, and optionally at least one of (b) and (c), where
(b) comprise monoethylenically unsaturated monomers other than the monomers (a) and copolymerizable with the monomer (a), and where
(c) comprise monomers having at least two ethylenically unsaturated, nonconjugated double bonds in the molecule,
in the presence of at least one of
B1) polysaccharides, oxidatively, hydrolytically or enzymatically degraded polysaccharides, oxidized hydrolytically degraded or oxidized enzymatically degraded polysaccharides or suchlike chemically modified degraded products, chemically modified mono-, oligo- or polysaccharides, or mixtures of the specified compounds, and
B2) polypeptides, hydrolytically or enzymatically degraded and optionally chemically modified polypeptides, or mixtures of the specified compounds.

2. Deliming composition according to Claim 1, **characterized in that** the monomer A is free from the monomers (b) and (c).

3. Deliming composition according to Claim 1, **characterized in that** the monomer mixture of the monomer (A) comprises:
(a) acrylic acid or methacrylic acid or a mixture thereof or the alkali metal, alkaline earth metal or ammonium salts thereof, and at least one of (b) and (c), where
(b) comprises monoethylenically unsaturated monomers other than the monomers (a) and copolymerizable with the monomer (a), and where
(c) comprise monomers having at least two ethylenically unsaturated, nonconjugated double bonds in the molecule.

4. Deliming composition according to any of Claims 1 to 3, **characterized in that** the graft polymer is obtainable by radical polymerization of
A) a monomer selected from or a monomer mixture of
(a) 20 to 100 wt% of acrylic acid or methacrylic acid or a mixture thereof or the alkali metal, alkaline earth metal or ammonium salts thereof, based on the monomer A,
(b) 0 to 80 wt% of other monoethylenically unsaturated monomers which are copolymerizable with the monomer (a), based on the monomer A, and
(c) 0 to 5 wt% of monomers having at least two ethylenically unsaturated, nonconjugated double bonds in the molecule, based on the monomer A, in the presence of at least one of
B1) polysaccharides, oxidatively, hydrolytically or enzymatically degraded polysaccharides, oxidized hydrolytically degraded or oxidized enzymatically degraded polysaccharides or suchlike chemically modified degraded products, chemically modified mono-, oligo- or polysaccharides, or mixtures of the specified compounds, and
B2) polypeptides, hydrolytically or enzymatically degraded and optionally chemically modified polypeptides, or mixtures of the specified compounds.

5. Deliming composition according to any of Claims 1 to 4, **characterized in that** the graft polymer is obtainable by radical polymerization of acrylic acid, polypeptide hydrolysate and polysaccharide hydrolysate.

6. Deliming composition according to any of Claims 1 to 5, **characterized in that** the polysaccharides B1) have a mean molecular weight in the range of 500 - 10000 daltons, more particularly 3000 to 10000 daltons.

7. Deliming composition according to any of Claims 1 to 6, **characterized in that** the polysaccharides B1) comprise hydrolytically degraded starch.

8. Deliming composition according to any of Claims 1 to 7, **characterized in that** the polypeptides B2) have a mean molecular weight in the range of greater than or equal to 1000 daltons, more particularly greater than or equal to 3000.

9. Deliming composition according to any of Claims 1 to 8, **characterized in that** the polypeptides B2) comprise worked-up shavings of cattle hide having undergone chrome or chromium-free tanning.

10. Deliming process for deliming a hide for deliming, **characterized in that** the deliming process comprises at least the following process steps:
a) providing a hide for deliming; and
b) treating the hide for deliming with a deliming agent, the deliming agent comprising a graft polymer of at least one of polysaccharides, polypeptides or derivatives thereof, wherein the derivatives of the polysaccharides are oxidatively, hydrolytically or enzymatically degraded polysaccharides, oxidized hydrolytically degraded or oxidized enzymatically degraded polysaccharides or suchlike chemically modified degraded products or chemically modified mono-, oligo-or polysaccharides and wherein the derivatives of the polypeptides are hydrolytically or enzymatically degraded and optionally chemically modified polypeptides,
the graft polymer being obtainable by radical polymerization of
A) a monomer selected from or a monomer mixture of
(a) acrylic acid or methacrylic acid or a mixture thereof or the alkali metal, alkaline earth metal or ammonium salts thereof, and optionally at least one of (b) and (c), where
(b) comprise monoethylenically unsaturated monomers other than the monomers (a) and copolymerizable with the monomer (a), and where
(c) comprise monomers having at least two ethylenically unsaturated, nonconjugated double bonds in the molecule,
in the presence of at least one of
B1) polysaccharides, oxidatively, hydrolytically or enzymatically degraded polysaccharides, oxidized hydrolytically degraded or oxidized enzymatically degraded polysaccharides or suchlike chemically modified degraded products, chemically modified mono-, oligo- or polysaccharides, or mixtures of the specified compounds, and
B2) polypeptides, hydrolytically or enzymatically degraded and optionally chemically modified polypeptides, or mixtures of the specified compounds.

11. Deliming process according to Claim 10, **characterized in that** in process step b) the deliming agent is present in a fraction of ≥ 0.5 wt% to ≤ 12 wt%, based on the amount of the hide for deliming.

12. Process for producing leather, comprising the process steps of:
i) providing a raw hide;
ii) liming or painting the raw hide;
iii) deliming the raw hide; and
iv) tanning the raw hide,
**characterized in that** the deliming of the raw hide in process step iii) is carried out using a deliming agent which comprises a graft polymer of at least one of polysaccharides, polypeptides or derivatives thereof, wherein the derivatives of the polysaccharides are oxidatively, hydrolytically or enzymatically degraded polysaccharides, oxidized hydrolytically degraded or oxidized enzymatically degraded polysaccharides or suchlike chemically modified degraded products or chemically modified mono-, oligo- or polysaccharides and wherein the derivatives of the polypeptides are hydrolytically or enzymatically degraded and optionally chemically modified polypeptides,
the graft polymer being obtainable by radical polymerization of
A) a monomer selected from or a monomer mixture of
(a) acrylic acid or methacrylic acid or a mixture thereof or the alkali metal, alkaline earth metal or ammonium salts thereof, and optionally at least one of (b) and (c), where
(b) comprise monoethylenically unsaturated monomers other than the monomers (a) and copolymerizable with the monomer (a), and where
(c) comprise monomers having at least two ethylenically unsaturated, nonconjugated double bonds in the molecule,
in the presence of at least one of
B1) polysaccharides, oxidatively, hydrolytically or enzymatically degraded polysaccharides, oxidized hydrolytically degraded or oxidized enzymatically degraded polysaccharides or suchlike chemically modified degraded products, chemically modified mono-, oligo- or polysaccharides, or mixtures of the specified compounds, and
B2) polypeptides, hydrolytically or enzymatically degraded and optionally chemically modified polypeptides, or mixtures of the specified compounds.

13. Use of a graft polymer for deliming a hide, the graft polymer comprising a graft polymer of at least one of polysaccharides, polypeptides or derivatives thereof, wherein the derivatives of the polysaccharides are oxidatively, hydrolytically or enzymatically degraded polysaccharides, oxidized hydrolytically degraded or oxidized enzymatically degraded polysaccharides or suchlike chemically modified degraded products or chemically modified mono-, oligo- or polysaccharides and wherein the derivatives of the polypeptides are hydrolytically or enzymatically degraded and optionally chemically modified polypeptides,
the graft polymer being obtainable by radical polymerization of
A) a monomer selected from or a monomer mixture of
(a) acrylic acid or methacrylic acid or a mixture thereof or the alkali metal, alkaline earth metal or ammonium salts thereof, and optionally at least one of (b) and (c), where
(b) comprise monoethylenically unsaturated monomers other than the monomers (a) and copolymerizable with the monomer (a), and where
(c) comprise monomers having at least two ethylenically unsaturated, nonconjugated double bonds in the molecule,
in the presence of at least one of
B1) polysaccharides, oxidatively, hydrolytically or enzymatically degraded polysaccharides, oxidized hydrolytically degraded or oxidized enzymatically degraded polysaccharides or suchlike chemically modified degraded products, chemically modified mono-, oligo- or polysaccharides, or mixtures of the specified compounds, and
B2) polypeptides, hydrolytically or enzymatically degraded and optionally chemically modified polypeptides, or mixtures of the specified compounds.

14. Leathermaking intermediate delimed with a graft polymer, the graft polymer comprising a graft polymer of at least one of polysaccharides, polypeptides or derivatives thereof, wherein the derivatives of the polysaccharides are oxidatively, hydrolytically or enzymatically degraded polysaccharides, oxidized hydrolytically degraded or oxidized enzymatically degraded polysaccharides or suchlike chemically modified degraded products or chemically modified mono-, oligo-or polysaccharides and wherein the derivatives of the polypeptides are hydrolytically or enzymatically degraded and optionally chemically modified polypeptides,
the graft polymer being obtainable by radical polymerization of
A) a monomer selected from or a monomer mixture of
(a) acrylic acid or methacrylic acid or a mixture thereof or the alkali metal, alkaline earth metal or ammonium salts thereof, and optionally at least one of (b) and (c), where
(b) comprise monoethylenically unsaturated monomers other than the monomers (a) and copolymerizable with the monomer (a), and where
(c) are monomers having at least two ethylenically unsaturated, nonconjugated double bonds in the molecule,
in the presence of at least one of
B1) polysaccharides, oxidatively, hydrolytically or enzymatically degraded polysaccharides, oxidized hydrolytically degraded or oxidized enzymatically degraded polysaccharides or suchlike chemically modified degraded products, chemically modified mono-, oligo- or polysaccharides, or mixtures of the specified compounds, and
B2) polypeptides, hydrolytically or enzymatically degraded and optionally chemically modified polypeptides, or mixtures of the specified compounds.

## Revendications

1. Composition de déchaulage destinée au déchaulage des peaux, **caractérisée en ce que** cette composition de déchaulage comporte au moins
- une peau à déchauler et
- un agent de déchaulage, lequel agent de déchaulage
contient un polymère greffé d'au moins un polysaccharide, un polypeptide ou leurs dérivés, les dérivés de polysaccharides étant des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et les dérivés des polypeptides étant des polypeptides dégradés par voie hydrolytique ou enzymatique et le cas échéant des polypeptides modifiés chimiquement,
lequel polymère greffé peut être obtenu par polymérisation radicalaire
A) d'un monomère ou d'un mélange de monomères choisis parmi les suivants :
(a) acide acrylique ou acide méthacrylique ou un mélange de ceux-ci ou des sels métalliques alcalins, métalliques alcalino-terreux ou d'ammonium de ceux-ci, et le cas échéant au moins un parmi (b) et (c), à savoir
(b) d'autres monomères insaturés monoéthyléniquement que les monomères (a) qui sont copolymérisables avec le monomère (a) et
(c) des monomères avec au moins deux doubles liaisons non conjugées insaturées éthyléniquement dans la molécule,
en présence d'au moins un parmi
B1) des polysaccharides, des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et des mélanges des composés susmentionnés et
B2) des polypeptides, des polypeptides dégradés par voie hydrolytique ou enzymatique et, le cas échéant, modifiés chimiquement ou des mélanges des composés susmentionnés.

2. Composition de déchaulage selon la revendication 1, **caractérisée en ce que** le monomère A est exempt des monomères (b) et (c).

3. Composition de déchaulage selon la revendication 1, **caractérisée en ce que** le mélange de monomères du monomère (A) comprend
(a) de l'acide acrylique ou de l'acide métacrylique ou un mélange de ceux-ci ou des sels métalliques alcalins, métalliques alcalino-terreux ou d'ammonium de ceux-ci, et au moins un parmi (b) et (c),
(b) comprend d'autres monomères insaturés monoéthyléniquement que les monomères (a) qui sont copolymérisables avec le monomère (a) et
(c) comprend des monomères avec au moins deux doubles liaisons non conjugées insaturées éthyléniquement.

4. Composition de déchaulage selon une des revendications 1 à 3, **caractérisée en ce que** le polymère greffé peut être obtenu par polymérisation radicalaire
A) d'un monomère ou d'un mélange de monomères choisis parmi les suivants :
(a) de 20 à 100% en poids d'acide acrylique ou d'acide méthacrylique ou d'un mélange de ceux-ci ou des sels métalliques alcalins, métalliques alcalino-terreux ou d'ammonium de ceux-ci, par rapport au monomère A,
(b) de 0 à 80% en poids d'autres monomères insaturés monoéthyléniquement que les monomères (a) qui sont copolymérisables avec le monomère (a) et
(c) de 0 à 5% en poids de monomères avec au moins deux doubles liaisons non conjugées insaturées éthyléniquement dans la molécule, par rapport au monomère A, en présence d'au moins un parmi
B1) des polysaccharides, des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et des mélanges des composés susmentionnés et
B2) des polypeptides, des polypeptides dégradés par voie hydrolytique ou enzymatique et, le cas échéant, modifiés chimiquement ou des mélanges des composés susmentionnés.

5. Composition de déchaulage selon une des revendications 1 à 4, **caractérisée en ce que** le polymère greffé peut être obtenu par polymérisation radicalaire d'acide acrylique, d'hydrolysat de polypeptide ou d'hydrolysat de polysaccharide.

6. Composition de déchaulage selon une des revendications 1 à 5, **caractérisée en ce que** les polysaccharides B1) présentent une masse moléculaire moyenne de 500 à 10000 daltons, en particulier de 3000 à 10000 daltons.

7. Composition de déchaulage selon une des revendications 1 à 6, **caractérisée en ce que** les polysaccharides B1) comprennent de l'amidon dégradé par voie hydrolytique.

8. Composition de déchaulage selon une des revendications 1 à 7, **caractérisée en ce que** les polypeptides B2) présentent une masse moléculaire moyenne supérieure ou égale à 1000 daltons, en particulier supérieure à égale à 3000 daltons.

9. Composition de déchaulage selon une des revendications 1 à 8, **caractérisée en ce que** les polypeptides B2) comprennent des poussières de ponçage régénérées de peau de bovins tannée au chrome ou sans chrome.

10. Procédé de déchaulage destiné au déchaulage d'une peau à déchauler, **caractérisé en ce que** ce procédé de déchaulage comprend au moins les étapes de procédé suivantes :
a) préparation d'une peau à déchauler et
b) traitement de la peau à déchauler avec un agent de déchaulage, lequel agent de déchaulage contient un polymère greffé d'au moins un polysaccharide, un polypeptide ou leurs dérivés, les dérivés de polysaccharides étant des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et les dérivés des polypeptides étant des polypeptides dégradés par voie hydrolytique ou enzymatique et le cas échéant des polypeptides modifiés chimiquement,
lequel polymère greffé peut être obtenu par polymérisation radicalaire
A) d'un monomère ou d'un mélange de monomères choisis parmi les suivants :
(a) acide acrylique ou acide méthacrylique ou un mélange de ceux-ci ou des sels métalliques alcalins, métalliques alcalino-terreux ou d'ammonium de ceux-ci, et le cas échéant au moins un parmi (b) et (c), à savoir
(b) d'autres monomères insaturés monoéthyléniquement que les monomères (a) qui sont copolymérisables avec le monomère (a) et
(c) des monomères avec au moins deux doubles liaisons non conjugées insaturées éthyléniquement dans la molécule,
en présence d'au moins un parmi
B1) des polysaccharides, des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et des mélanges des composés susmentionnés et
B2) des polypeptides, des polypeptides dégradés par voie hydrolytique ou enzymatique et, le cas échéant, modifiés chimiquement ou des mélanges des composés susmentionnés.

11. Procédé de déchaulage selon la revendication 10, **caractérisé en ce qu'**à l'étape de procédé b), l'agent de déchaulage est présent dans une proportion de 0,5% en poids minimum à 12% en poids maximum par rapport à la quantité de peau à déchauler.

12. Procédé destiné à la fabrication de cuir, comprenant les étapes de procédé suivantes :
i) préparation d'une peau brute,
ii) chaulage ou enchaussenage de la peau brute,
iii) déchaulage de la peau brute et
iv) tannage de la peau brute,
**caractérisé en ce que** le déchaulage selon l'étape de procédé iii) est réalisé en utilisant un agent de déchaulage qui contient un polymère greffé d'au moins un polysaccharide, un polypeptide ou leurs dérivés, les dérivés de polysaccharides étant des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et les dérivés des polypeptides étant des polypeptides dégradés par voie hydrolytique ou enzymatique et le cas échéant des polypeptides modifiés chimiquement,
lequel polymère greffé peut être obtenu par polymérisation radicalaire
A) d'un monomère ou d'un mélange de monomères choisis parmi les suivants :
(a) acide acrylique ou acide méthacrylique ou un mélange de ceux-ci ou des sels métalliques alcalins, métalliques alcalino-terreux ou d'ammonium de ceux-ci, et le cas échéant au moins un parmi (b) et (c), à savoir
(b) d'autres monomères insaturés monoéthyléniquement que les monomères (a) qui sont copolymérisables avec le monomère (a) et
(c) des monomères avec au moins deux doubles liaisons non conjugées insaturées éthyléniquement dans la molécule,
en présence d'au moins un parmi
B1) des polysaccharides, des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et des mélanges des composés susmentionnés et
B2) des polypeptides, des polypeptides dégradés par voie hydrolytique ou enzymatique et, le cas échéant, modifiés chimiquement ou des mélanges des composés susmentionnés.

13. Utilisation d'un polymère greffé pour le déchaulage d'une peau, lequel polymère greffé contient un polymère greffé d'au moins un polysaccharide, un polypeptide ou leurs dérivés, les dérivés de polysaccharides étant des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et les dérivés des polypeptides étant des polypeptides dégradés par voie hydrolytique ou enzymatique et le cas échéant des polypeptides modifiés chimiquement,
lequel polymère greffé peut être obtenu par polymérisation radicalaire
A) d'un monomère ou d'un mélange de monomères choisis parmi les suivants :
(a) acide acrylique ou acide méthacrylique ou un mélange de ceux-ci ou des sels métalliques alcalins, métalliques alcalino-terreux ou d'ammonium de ceux-ci, et le cas échéant au moins un parmi (b) et (c), à savoir
(b) d'autres monomères insaturés monoéthyléniquement que les monomères (a) qui sont copolymérisables avec le monomère (a) et
(c) des monomères avec au moins deux doubles liaisons non conjugées insaturées éthyléniquement dans la molécule,
en présence d'au moins un parmi
B1) des polysaccharides, des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et des mélanges des composés susmentionnés et
B2) des polypeptides, des polypeptides dégradés par voie hydrolytique ou enzymatique et, le cas échéant, modifiés chimiquement ou des mélanges des composés susmentionnés.

14. Produit semi-fini de la fabrication de cuir qui est déchaulé avec un polymère greffé, lequel polymère greffé contient un polymère greffé d'au moins un polysaccharide, un polypeptide ou leurs dérivés, les dérivés de polysaccharides étant des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et les dérivés des polypeptides étant des polypeptides dégradés par voie hydrolytique ou enzymatique et le cas échéant des polypeptides modifiés chimiquement,
lequel polymère greffé peut être obtenu par polymérisation radicalaire
A) d'un monomère ou d'un mélange de monomères choisis parmi les suivants :
(a) acide acrylique ou acide méthacrylique ou un mélange de ceux-ci ou des sels métalliques alcalins, métalliques alcalino-terreux ou d'ammonium de ceux-ci, et le cas échéant au moins un parmi (b) et (c), à savoir
(b) d'autres monomères insaturés monoéthyléniquement que les monomères (a) qui sont copolymérisables avec le monomère (a) et
(c) des monomères avec au moins deux doubles liaisons non conjugées insaturées éthyléniquement dans la molécule,
en présence d'au moins un parmi
B1) des polysaccharides, des polysaccharides dégradés par voie oxydative, hydrolytique ou enzymatique, des polysaccharides dégradés par voie hydrolytique oxydés ou dégradés par voie enzymatique oxydés ou des produits dégradés modifiés chimiquement de ce type ou des monosaccharides, des oligosaccharides ou des polysaccharides modifiés chimiquement et des mélanges des composés susmentionnés et
B2) des polypeptides, des polypeptides dégradés par voie hydrolytique ou enzymatique et, le cas échéant, modifiés chimiquement ou des mélanges des composés susmentionnés.
